# EUROPÄISCHE PATENTSCHRIFT

(11) **EP 2 709 935 B1**
(45) Veröffentlichungstag und Bekanntmachung des Hinweises auf die Patenterteilung: **01.04.2015**
(21) Anmeldenummer: 12720905.4
(22) Anmeldetag: 16.05.2012
(51) Int. Cl.: B65G 17/20, B65G 19/02, B65G 19/18, B65G 17/36, B65G 47/61

(54) **FÖRDERANLAGE UND TRANSPORTTASCHE FÜR EINE FÖRDERANLAGE SOWIE VERFAHREN ZUR BEFÖRDERUNG EINES FÖRDERGUTES**
CONVEYING INSTALLATION AND TRANSPORTING POCKET FOR A CONVEYING INSTALLATION, AND METHOD FOR CONVEYING AN ARTICLE
INSTALLATION DE TRANSPORT ET POCHETTE DE TRANSPORT POUR INSTALLATION DE TRANSPORT ET PROCÉDÉ DE TRANSPORT D'UN ARTICLE À TRANSPORTER

(30) Priorität: 17.05.2011 DE 102011101987
(43) Veröffentlichungstag der Anmeldung: 26.03.2014
(73) Patentinhaber: SSI Schäfer Peem GmbH, 8051 Graz (AT)
(72) Erfinder: WINKLER, Max, A-8010 Graz (AT)
(74) Vertreter: Witte, Weller & Partner Patentanwälte mbB
(86) Internationale Anmeldenummer: PCT/EP2012/059128
(87) Internationale Veröffentlichungsnummer: WO 2012/156451

(56) Entgegenhaltungen:
- EP-A1- 2 130 968
- DE-A1- 19 614 905
- DE-A1-102008 061 685
- DE-U1- 20 022 533

## Beschreibung

Die vorliegende Erfindung betrifft eine Fördereinrichtung, insbesondere eine Hängeförderanlage, und eine Transporttasche nach dem Oberbegriff des Anspruchs 1 für eine solche Förderanlage sowie ein Verfahren zur Beförderung eines Fördergutes in einer Förderanlage nach dem Oberbegriff des Anspruchs 16.

Eine Förderanlage mit einer Transporttasche nach dem Oberbegriff des Anspruchs 1 ist aus der DE 10 2008 026 720 A1 bekannt. Die bekannte Förderanlage weist eine Mehrzahl von Transporttaschen auf, die eine Tragewand und eine Boden-Seiten-Wand aufweisen, wobei die Boden-Seiten-Wand an ihrem unteren Rand seitlich hervorstehende Kupplungsstifte aufweist, die in Kupplungen einrasten können, die seitlich an einem unteren Bereich der Tragewand angebracht sind. Die Transporttaschen weisen ferner ein Gestänge zur Betätigung der Kupplungen auf, mit dem Haken in den Kupplungen zwischen einer offenen Stellung und einer geschlossenen Stellung verschwenkt werden können. Die Haken können in der geschlossenen Stellung die Kupplungsstifte der Boden-Seiten-Wand halten.

Aus der DE 200 22 533 U1 ist eine Vorrichtung zum Verbinden eines Fördergutes mit einer Hängeförderanlage bekannt, die ein Kupplungsstück zur Herstellung einer lösbaren Verbindung mit dem Fördergut aufweist, wobei das Fördergut durch ein Klemmelement kraftschlüssig mit der Vorrichtung verbindbar ist. Die Vorrichtung weist ferner einen Hebel auf, der von einer Ruhestellung in eine Auslösestellung zur Aufhebung der Klemmwirkung verlagerbar ist.

Aus der DE 10 2008 061 685 A1 ist eine Beladestation für Transporttaschen bekannt, die einen Senkrechtförderer zum Zuführen der Transporttaschen in eine Beladeposition aufweist.

Aus der DE 196 14 905 A1 ist eine Fördertasche für eine Hängeförderanlage bekannt, die eine jeweils zum Tragen nur eines Trägers an seinem hakenförmigem Kopfbereich vorgesehene, in einem Grundkörper schwenkbar angeordnete Klinke aufweist, die einen aus dem Grundkörper herausragenden Fortsatz zum Verschwenken der Klinke zum Öffnen der Fördertasche aufweist, wobei eine Schwenkachse zum Verschwenken der Klinke vorgesehen ist, die in Transportrichtung hinter einem Auflagepunkt des Hakens auf der Klinke liegt. Daneben ist am Grundkörper eine Ausnehmung vorgesehen, in die die Klinke zur Sicherung der Lage des aufgenommenen hakenförmigen Kopfbereichs einfahren kann.

Damit kann grundsätzlich ein automatisiertes Beladen der Fördertasche ermöglicht werden, wobei die Öffnung der Klinke in Fahrtrichtung gesehen nach hinten gerichtet ist, so dass der hakenförmige Kopfbereich des Trägers bei der Abgabe nach hinten ausgerückt werden kann, ohne dass dieser über die Geschwindigkeit der Fördertasche hinaus beschleunigt werden muss. Zum Einbringen des hakenförmigen Kopfbereichs in die Klinke ist ferner eine Kulissenbahn vorgesehen, die grundsätzlich eine automatisierte Bestückung ermöglichen kann.

Eine derartige Fördertasche mit einem derartigen Trägermechanismus kann sich zum Transport von auf Trägern hängendem Fördergut, insbesondere von Bekleidung oder dergleichen, eignen. Ein Nachteil der bekannten Fördertasche ist jedoch in der mangelnden Eignung zur Beförderung von Fördergütern zu sehen, die generell nicht an Trägern, etwa Kleiderbügeln, aufgenommen werden können. Daneben ist ein Nachteil darin zu sehen, dass zwar die Abgabe des Trägers mit dem hakenförmigen Kopfbereich durch die entgegen der Transportrichtung geöffnete Klinke erleichtert ist, jedoch die Bestückung mittels einer aufwändigen Kulissenbahn erfolgt, wobei der Träger mit dem hakenförmigen Kopfbereich zumindest in einem kurzen Zeitintervall über die Geschwindigkeit der Fördertasche hinaus beschleunigt werden muss, um den Soll-Auflagepunkt auf der Klinke erreichen zu können.

Es ist daher eine Aufgabe der Erfindung, eine Transporttasche anzugeben, die bei einfacher Gestaltung für eine Vielzahl verschiedener Fördergüter, insbesondere Stückgüter, geeignet ist. Dabei soll die Fördertasche eine hohe Betriebssicherheit, insbesondere gegen den Verlust von Fördergütern, gewährleisten und möglichst zur manuellen und/oder zur automatisierten Handhabung geeignet sein. Ferner sollen eine Förderanlage mit einer solchen Transporttasche und ein Verfahren angegeben werden, das mit dieser Förderanlage und mit einer solchen Transporttasche durchgeführt werden kann.

Diese Aufgabe wird gelöst durch eine Transporttasche zur Beförderung eines Fördergutes in einer Förderanlage nach Anspruch 1.

Die Aufgabe der Erfindung wird auf diese Weise vollkommen gelöst.

Erfindungsgemäß kann das Fördergut aufgrund seines Eigengewichts in besonders einfacher Weise zur Ladesicherung beitragen. Ein Mehr an Gewicht des Fördergutes kann dabei über das Ladehilfsmittel, in dem es aufgenommen ist, die Verschlussklappe, die Handhabungslasche und den Klemmabschnitt in einer Weise auf den Klemmhebel einwirken, dass die Klemmwirkung verstärkt wird.

Mit anderen Worten kann etwa eine Stirnfläche des Klemmhebels in der Haltestellung derart mit dem Klemmabschnitt der Handhabungslasche zusammenwirken, dass ein durch das Fördergut bedingter Zug am Klemmabschnitt eine Erhöhung der Haltekraft bewirkt.

Da es im Wesentlichen auf das Eigengewicht und weniger auf geometrische Abmessungen des Fördergutes ankommt, eignet sich die Transporttasche für eine Vielzahl verschieden dimensionierter und geformter Fördergüter, insbesondere Stückgüter. Es versteht sich, dass statt eines Fördergutes ohne Weiteres auch zwei oder mehr Fördergüter in einem Ladehilfsmittel der Transporttasche aufgenommen werden können.

Es kann bevorzugt sein, wenn die Verschlussklappe, die Handhabungslasche und/oder der Klemmabschnitt zumindest teilweise flexibel ausgestaltet sind.

Eine gewisse Flexibilität kann einerseits die Handhabung verbessern, insbesondere bei der Verriegelung der Transporttasche. Ebenso kann sich die Eignung der Transporttasche zur Aufnahme verschiedenartiger Förderguter erhöhen.

Bei der Förderanlage kann es sich etwa um eine Hängeförderanlage handeln, insbesondere mit einer Kette, einem Riemen oder dergleichen, bei der der Förderstrang mit einem Zugmittel gekoppelt ist, das zumindest eine Aufnahme aufweist, an der das Trägerteil der Transporttasche in grundsätzlich bekannter Weise aufgehängt oder angebracht werden kann.

Gemäß einer weiteren Ausgestaltung weist der Klemmhebel einen Klemmarm auf, der in der Haltestellung an einer Kontaktstelle auf den Klemmabschnitt einwirkt, wobei der Klemmhebel um eine Klemmachse verschwenkbar ist, die im Wesentlichen unterhalb der Kontaktstelle angeordnet ist.

Der Begriff "unterhalb" ist vorrangig auf eine beispielhafte Ausführungsform bezogen, bei der die Transporttasche im Wesentlichen unterhalb des Förderstrangs transportiert wird. Dabei wirkt die Gewichtskraft des Fördergutes im Wesentlichen nach unten und bedingt so einen Zug am Klemmabschnitt. Infolgedessen kann sich bei der genannten Gestaltung die Klemmwirkung verstärken, wenn die Kontaktstelle zwischen dem Klemmarm und dem Klemmabschnitt im Wesentlichen oberhalb der Klemmachse angeordnet ist.

Gemäß einem weiteren Aspekt der Erfindung wirkt der Klemmhebel derart mit dem Klemmabschnitt zusammen, dass ein im Wesentlichen durch die Gewichtskraft hervorgerufener Zug an der Handhabungslasche eine Erhöhung einer auf den Klemmabschnitt einwirkenden Klemmkraft bewirkt.

Es versteht sich auch, dass grundsätzlich das Eigengewicht des Fördergutes zur Verbesserung der Klemmwirkung beiträgt. Die Klemmkraft kann im Wesentlichen mit der Haltekraft korrespondieren. Ferner ist anzumerken, dass etwa Umlenkrollen den Verlauf der Handhabungslasche in einer Weise ändern können, dass ein schwerkraftbedingter Zug, der naturgemäß im Wesentlichen nach unten gerichtet ist, nach einer Umlenkung einen aufwärts gerichteten Zug an der Handhabungslasche bewirken kann. Auch dies kann ohne Weiteres zur Erhöhung der Klemmkraft beitragen, insbesondere wenn die Klemmachse, um die der Klemmhebel verschwenkbar ist, im Wesentlichen oberhalb der Kontaktstelle angeordnet ist, an der der Klemmarm auf den Klemmabschnitt einwirkt. Die Begriffe "unterhalb", "oberhalb" bzw. "abwärts" und "aufwärts" sind nicht einschränkend zu verstehen. Die Erfindung funktioniert auch dann, wenn etwa eine 90°-Umlenkung der Handhabungslasche erfolgt.

Es ergibt sich ebenfalls der Vorteil, dass ein Zug an der Handhabungslasche entlang einer Soll-Löserichtung in der Freigabestellung des Klemmhebels auch tatsächlich die Handhabungslasche mit dem Klemmabschnitt lösen und somit die Verschlussklappe des Ladehilfsmittels öffnen kann. Dagegen bewirkt derselbe Zug in der Soll-Löserichtung in der Haltestellung eine umso wirksamere Klemmung. Es ist somit bei einfacher baulicher Gestaltung eine äußerst hohe Betriebssicherheit gewährleistet.

Daneben ist es weiter bevorzugt, wenn das Ladehilfsmittel zusätzlich eine erste und eine zweite Seitenwandung und/oder eine Bodenwandung aufweist.

Auf diese Weise kann das aufgenommene Fördergut eine Versteifung der zumindest ersten und zweiten Seitenwandung bewirken. Das aufgenommene Fördergut kann nämlich durch sein Eigengewicht die seitliche Führung verbessern, indem die zumindest erste und zweite Seitenwandung unter (Zug-)Spannung gesetzt werden. Auch dabei ist es besonders vorteilhaft, dass die seitliche Führung umso ausgeprägter ist, je höher das Gewicht des Förderguts ist. Ein seitliches Herausfallen des Fördergutes kann entlang des Förderstrangs auch bei besonderen Betriebszuständen, etwa auftretenden Fliehkräften in Kurven oder aber einem seitlichen Aufschaukeln der Transporttasche, wirksam vermieden werden.

In diesem Zusammenhang wird gemäß einem weiteren Aspekt, der auch Gegenstand einer eigenständigen Erfindung sein kann, eine Fördertasche zur Beförderung eines Fördergutes in einer Förderanlage, insbesondere einer Hängeförderanlage, angegeben, mit einem Trägerteil, das zur Aufnahme an einem Förderstrang der Förderanlage ausgebildet ist, mit einem Ladehilfsmittel zur Aufnahme des Fördergutes, wobei das Ladehilfsmittel vorzugsweise eine erste und eine zweite Seitenwandung, eine Bodenwandung und eine Verschlussklappe aufweist, und wobei das aufgenommene Fördergut eine Versteifung der zumindest ersten und zweiten Seitenwandung bewirkt.

Dieser Aspekt kann vorteilhaft dadurch weitergebildet sein, dass die erste und zweite Seitenwandung, die Bodenwandung und/oder die Verschlussklappe flexibel ausgestaltet sind.

Gemäß einer vorteilhaften Ausführungsform weist das Ladehilfsmittel eine Rückseite auf, die ggf. mit der zumindest ersten und zweiten Seitenwandung verbindbar ist, wobei die Verschlussklappe eine Grundfläche mit einer Bodenkante aufweist, die an der Bodenwandung angeschlagen ist.

Somit kann sich in einfacher Weise eine nahezu vollständige Einhausung des Fördergutes ergeben. Das Ladehilfsmittel kann seitlich in einer Querrichtung Z betrachtet z.B. dreieckig, quaderförmig oder trapezförmig ausgebildet sein. Es ist ferner bevorzugt, wenn die Bodenwandung nach unten geneigt ist. Eine derartige Schräge kann ein selbsttätiges Entladen der Transporttasche unterstützen.

Wenn die Verschlussklappe mit der Bodenwandung verbunden ist und insbesondere keine direkte Verbindung mit der zumindest ersten und zweiten Seitenwandung des Ladehilfsmittels aufweist, kann sich eine besonders große Öffnung zum Bestücken und Entladen der Transporttasche ergeben. Ferner können auch besonders große Ladegüter, deren Abmessungen etwa in einer Förderrichtung über die Tiefe der zumindest ersten und zweiten Seitenwandung hinausragen, aufgenommen werden. Auch bei solchen Fördergütern gewährleistet die Versteifung der zumindest ersten und zweiten Seitenwandung durch das Gewicht des Förderguts eine seitliche Führung. Somit ist weiterhin eine hohe Betriebssicherheit, insbesondere gegen Verlust von Fördergütern, gewährleistet. Auch in dem Falle, dass die Verschlussklappe etwa bei einem besonders großen Fördergut "ausgebaucht" ist, ist die Klemmwirkung des Klemmhebels weiterhin gewährleistet.

Somit kann die Transporttasche mit verschiedensten Fördergütern unterschiedlichster Geometrien und Abmessungen bestückt werden.

In einer alternativen Ausgestaltung kann die Transporttasche eine Rückseite aufweisen, die mit der Verschlussklappe gekoppelt ist. Die Kopplung kann unmittelbar oder mittelbar über eine Bodenwandung erfolgen. Hierbei kann grundsätzlich auf die Seitenwandungen verzichtet werden. Seitlich in einer Querrichtung Z betrachtet kann das Ladehilfsmittel folglich einen V-förmigen oder einen U-förmigen Querschnitt aufweisen. Ein solches Ladehilfsmittel kann sich für bestimmte Fördergüter anbieten, insbesondere dann, wenn die Rückseite und die Verschlussklappe eine bestimmte Flexibilität aufweisen. Somit kann das Fördergut in hohem Maße umschmiegt werden.

Gemäß einem weiteren vorteilhaften Aspekt sind die Verschlussklappe und/oder zumindest die Rückseite, die Seitenwandungen und/oder die Bodenwandung im Wesentlichen aus einem Gewebe, insbesondere einem Stoffgewebe oder einem Stoffverbundgewebe, hergestellt.

Dadurch kann eine hohe Flexibilität bewirkt werden. Das Fördergut kann besonders sanft transportiert werden. Es versteht sich, dass das Gewebe beispielsweise an einer Rahmenstruktur aufgenommen sein kann, die ebenso eine gewisse Flexibilität aufbieten kann.

Mit einer Gewebeverschlussklappe können auch Fördergüter mit unregelmäßigen Geometrien schonend und sicher aufgenommen werden. Es kann sich dabei eine "Umschmiegung" des Förderguts durch das Gewebe ergeben. Bereits auf diese Weise kann eine seitliche Führung des Fördergutes gewährleistet sein. Eine Fördertasche, die ein Ladehilfsmittel aufweist, das im Wesentlichen aus einem Gewebe besteht, kann besonders günstig hergestellt werden und ferner platzsparend, leicht und sogar faltbar ausgestaltet sein.

Es versteht sich auch hier, dass das Ladehilfsmittel insgesamt eine Rahmenstruktur aufweisen kann, etwa verstärkte Ecken oder Außenkanten, um die das Gewebegespannt sein kann. Das Gewebe kann hinsichtlich seiner Art und Beschaffenheit an die zu erwartenden Fördergüter und Betriebszustände angepasst werden.

Gemäß einer bevorzugten Ausgestaltung ist der Klemmhebel dazu ausgebildet, mit zumindest einem selektiv aktivierbaren Betätigungsglied der Förderanlage zur Entnahme des Fördergutes zusammenzuwirken.

Dabei kann der Hebel vorteilhaft etwa einen ersten Hebelarm, den Klemmarm und einen zweiten Hebelarm, einen Betätigungsarm, aufweisen. Es ist weiter bevorzugt, wenn der Betätigungsarm sowohl zum Klemmen als auch zum Lösen des Klemmabschnitts der Handhabungslasche genutzt werden kann. In alternativer Weise kann der Klemmhebel einen ersten Betätigungsarm und einen zweiten Betätigungsarm aufweisen, wobei der erste Betätigungsarm zum Klemmen des Klemmabschnitts und der zweite Betätigungsarm zum Lösen des Klemmabschnitts genutzt werden kann.

Es ist weiter bevorzugt, wenn der Betätigungsarm sowohl zur Betätigung mit dem Betätigungsglied als auch zur manuellen Betätigung durch einen Bediener ausgebildet ist. Somit kann das selektiv aktivierbare Betätigungsglied beispielsweise zur automatisierten Entnahme des Fördergutes dienen. Daneben kann ein Bediener, der etwa das Ladehilfsmittel mit dem Fördergut bestückt, in einfacher Weise durch "händische" Betätigung des Klemmhebels den Klemmabschnitt klemmen und somit die Verschlussklappe verriegeln.

Das Betätigungsglied kann etwa einen Schaltfinger aufweisen, der relativ zum Förderstrang verfahrbar ist.

Es ist weiter bevorzugt, wenn der Klemmhebel durch das Betätigungsglied der Förderanlage gewissermaßen im "Vorbeifahren" entriegelt werden kann. Wird das Betätigungsglied während des Transports der Transporttasche in geeigneter Weise in einen Förderpfad des Förderstrangs eingefahren, kann der Klemmhebel durch die Eigenbewegung der Transporttasche von der Haltestellung in die Freigabestellung überführt werden. Hierbei ist zum Lösen des Klemmhebels und zum automatisierten Entladen der Transporttasche lediglich eine einfache Zustellbewegung erforderlich.

Es ist grundsätzlich vorstellbar, dass der Klemmhebel auch von einem Bediener, etwa durch einfaches Umlegen, von der Haltestellung in die Freigabestellung überführt werden kann.

Gemäß einer weiteren bevorzugten Ausführungsform ist das Ladehilfsmittel bei geöffneter Verschlussklappe derart als Hohlraum ausgebildet und weist vorzugsweise eine Verjüngung auf, dass ein weiteres Ladehilfsmittel einer weiteren gleich orientierten Transporttasche stapelbar in den Hohlraum einfahren kann.

Durch diese Maßnahme kann eine Mehrzahl von Transporttaschen in einfacher Weise platzsparend gepackt bzw. gestapelt werden. Die erforderliche Staulänge kann signifikant reduziert werden und ist etwa im Wesentlichen nur noch durch die Abmessungen des Trägerteils bedingt. In diesem Zusammenhang kann sich die Gestaltung des Ladehilfsmittels mit der Verschlussklappe im Wesentlichen aus einem Gewebe besonders vorteilhaft auswirken.

Gemäß einem weiteren Aspekt weist die Klemmeinrichtung zumindest ein Formschlusselement und/oder ein Formschlussgegenelement zur Erhöhung der Haltekraft auf.

Auf diese Weise kann eine Formschlusskomponente zur im Wesentlichen auf einen Reibschluss beruhenden Klemmkraft zur Erzeugung der Haltekraft hinzutreten. Es versteht sich dabei, dass die Formschlusskomponente in der Haltestellung im Wesentlichen der Gewichtskraft des Ladegutes entgegengerichtet sein kann. Formschlusselemente können etwa Hinterschneidungen, Widerhaken, Tannenbaumprofile oder Ähnliches umfassen.

Gemäß einer weiteren Ausgestaltung weist zumindest der Klemmabschnitt und/oder der Klemmarm eine Beschichtung oder Oberflächenbearbeitung zur Erhöhung der Haltekraft auf.

Hierbei kann grundsätzlich eine Erhöhung der Reibkoeffizienten des Klemmabschnitts und/oder des Klemmarms, der über eine Stirnfläche auf diesen einwirkt, in Betracht gezogen werden. Die Stirnfläche wirkt auf den Klemmabschnitt in Richtung auf eine Gegenfläche ein, die am Trägerteil vorgesehen ist. Somit kann auch eine Erhöhung des Reibkoeffizienten zwischen dem Klemmabschnitt und der Gegenfläche zu einer Erhöhung der Haltekraft führen.

Gemäß einer weiteren Ausgestaltung ist es bevorzugt, wenn die Verschlussklappe der Transporttasche entlang eines Förderpfades in Längsrichtung X stromaufwärts orientiert ist.

Mit anderen Worten kann die Transporttasche mit der Rückseite des Ladehilfsmittels voran im Förderstrang entlang des Förderpfads stromabwärts bewegt werden.

Eine geöffnete Verschlussklappe kann entlang geeigneter Flächen hinter der Transporttasche hergezogen werden. In dieser Lage kann das Ladehilfsmittel besonders einfach auch während der Förderbewegung bestückt werden.

Beispielsweise kann ein Bediener das Fördergut zunächst auf die Verschlussklappe legen, die an ihm vorbei gleitet, und danach den Klemmabschnitt der Handhabungslasche mit der Klemmeinrichtung sichern und dabei gleichzeitig die Verschlussklappe schließen, wobei das Fördergut ebenso seitlich gesichert wird.

Die oben genannte Aufgabe wird ferner durch eine Förderanlage, insbesondere eine Hängeförderanlage, gelöst, mit einem Förderstrang mit zumindest einer Transporttasche nach einem der vorgenannten Aspekte.

Eine derartige Förderanlage, etwa ein Kettenförderer oder ein Riemenförderer, kann bei einfachem Aufbau eine hohe Flexibilität, insbesondere bezüglich zu befördernder Fördergutgeometrien und Fördergutdimensionen, eine hohe Betriebssicherheit und eine einfache Handhabung mit besonderer Eignung zum halbautomatisierten Betrieb gewährleisten.

In diesem Zusammenhang ist es weiter bevorzugt, wenn die Förderanlage zumindest eine Beladestation aufweist, die unterhalb des Förderstranges angeordnet ist und die eine Ladefläche aufweist, die im Wesentlichen parallel zum Förderstrang ausgerichtet ist, wobei vorzugsweise die Verschlussklappe einer geöffneten Transporttasche entlang der Ladefläche gleiten kann.

Somit kann das Fördergut etwa auch bei einer manuellen Beschickung durch einen Bediener besonders schonend in das Ladehilfsmittel eingebracht werden.

Gemäß einer weiteren Ausführungsform weist die Förderanlage zumindest eine Entladestation auf, die unterhalb des Förderstranges angeordnet ist und die eine Entladefläche aufweist, die vorzugsweise derart gegenüber dem Förderstrang geneigt ist und entlang der die Verschlussklappe einer geöffneten Transporttasche gleiten kann, dass das Fördergut einer geöffneten Transporttasche sich bei der Abgabe selbsttätig entlang der Verschlussklappe aus dem Ladehilfsmittel heraus bewegen kann.

Diese Maßnahme hat den Vorteil, dass eine besonders schonende Abgabe bzw. Entnahme des Förderguts möglich ist. Stoß- und ruckartige Belastungen können weitgehend vermieden werden. Die Entnahme ist auch während der Förderbewegung möglich.

Insbesondere wenn die Transporttasche zum Zusammenwirken mit dem Betätigungsglied ausgebildet ist, kann die Transporttasche automatisiert entladen werden.

In alternativer Weise, etwa bei robusteren Fördergütern, kann das Entladen etwa dergestalt erfolgen, dass das Betätigungsglied den Klemmhebel der Klemmeinrichtung über einem Zielbereich entriegelt, so dass die Verschlussklappe unter ihrem Eigengewicht und/oder dem Eigengewicht des Förderguts nach unten "fällt". Ebenso kann das Fördergut in einfacher Weise nach unten aus dem Ladehilfsmittel der Transporttasche herausfallen und im Zielbereich aufgenommen werden kann.

Wie vorstehend bereits erwähnt, empfiehlt es sich auch dabei, die Bodenwandung des Ladehilfsmittels in geeigneter Weise zu neigen, um ein selbsttätiges Entladen zu unterstützen.

Die Aufgabe der Erfindung wird ferner gelöst durch ein Verfahren zur Beförderung eines Förderguts in einer Förderanlage nach Anspruch 16.

Auch auf diese Weise wird die Aufgabe der Erfindung vollständig gelöst.

Der Schritt des Verriegelns der Transporttasche kann etwa durch Bewegen des Klemmhebels in Richtung auf die Haltestellung erfolgen. Dies kann manuell durch einen Bediener oder aber automatisiert erfolgen.

Alternativ kann es bevorzugt sein, wenn das Verriegeln dergestalt erfolgt, dass der Klemmhebel in Richtung der Haltestellung vorgespannt ist und beim Einführen des Klemmabschnitts in den Halteraum den Klemmabschnitt unmittelbar klemmt, ohne dass eine gesonderte Betätigung erforderlich ist.

Das Verfahren kann durch zumindest einen der folgenden Schritte weitergebildet sein: Verfahren der Transporttasche entlang eines Förderpfades in der Förderanlage; selektives Einfahren eines Betätigungsgliedes der Förderanlage in den Förderpfad; Verschwenken des Klemmhebels durch das Betätigungsglied in Richtung auf die Freigabestellung, dadurch Entriegeln der Transporttasche; und automatisierte Abgabe des Fördergutes.

Das Verfahren kann in bevorzugter Weise mit der oben genannten Förderanlage ausgeführt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1a: eine vereinfachte schematische Darstellung einer Förderanlage;
- Fig. 1b: eine perspektivische Ansicht einer Mehrzahl von Transporttaschen gemäß einer Ausführungsform einer erfindungsgemäßen Transporttasche;
- Fig. 2a und 2b: eine weitere perspektivische Ansicht einer Transporttasche gemäß Fig. 1b und eine Detailansicht eines Trägerteils der Transporttasche;
- Fig. 3a und 3b: eine Seitenansicht und eine vergrößerte Schnittansicht des Trägerteils gemäß Fig. 2b;
- Fig. 4: eine weitere perspektivische Ansicht des Trägerteils gemäß Fig. 2b mit einem Betätigungsglied;
- Fig. 5: eine vergrößerte seitliche Darstellung des Trägerteils gemäß Fig. 3b mit einem Betätigungsglied gemäß Fig. 4;
- Fig. 6: eine weitere Darstellung eines Trägerteils gemäß Fig. 5 mit einem verkippten Klemmhebel;
- Fig. 7a bis 7f: eine Abfolge verschiedener Betriebslagen des Klemmhebels und eines Klemmabschnitts bei einem Trägerteil gemäß Fig. 5;
- Fig. 8a: eine gebrochene vereinfachte Seitenansicht eines Trägerteils mit einer gegenüber Fig. 5 abgewandelten Klemmeinrichtung;
- Fig. 8b: eine gebrochene vereinfachte Schnittansicht eines Trägerteils mit einer weiteren gegenüber Fig. 5 abgewandelten Klemmeinrichtung;
- Fig. 8c: einen Schnitt durch das Trägerteil gemäß Figur 8b entlang der Linie VIIIc-VIIIc;
- Fig. 8d: eine gebrochene vereinfachte Seitenansicht eines Trägerteils mit noch einer weiteren gegenüber Fig. 5 abgewandelten Klemmeinrichtung;
- Fig. 8e und 8f: gebrochene Seitenansichten eines Trägerteils mit einer alternativen Klemmeinrichtung in einer Freigabestellung und einer Haltestellung;
- Fig. 8g: eine gebrochene Seitenansicht eines alternativen Klemmabschnitts;
- Fig. 8h: eine gebrochene Schnittansicht eines Trägerteils mit einer weiteren alternativen Klemmeinrichtung in einer Haltestellung mit einem Klemmabschnitt gemäß Fig. 8g;
- Fig. 9a und 9b: zwei perspektivische Ansichten der Transporttasche gemäß Fig. 2a, bei der die Verschlussklappe geöffnet ist;
- Fig. 9c: eine Mehrzahl von ineinander gepackten Transporttaschen;
- Fig. 10: eine vereinfachte schematische Darstellung einer Förderanlage;
- Fig. 11: eine vereinfachte schematische perspektivische Darstellung einer Beladestation mit einer Transporttasche, einem Fördergut und einem Bediener;
- Fig. 12a bis 12d: eine Abfolge perspektivischer Darstellungen einer Transporttasche während eines Beladevorgangs;
- Fig. 13a und 13b: zwei vereinfachte Seitenansichten einer Transporttasche während zweier alternativer Entladevorgänge; und
- Fig. 14: ein Flussdiagramm eines Verfahrens zur Beförderung eines Fördergutes mit einer Transporttasche.

In der nachfolgenden Beschreibung der Figuren werden gleiche Einheiten, Komponenten, Merkmale oder Ähnliches mit den gleichen Bezugszeichen bezeichnet. Abgewandelte Gegenstände werden mit abgewandelten Bezugszeichen bezeichnet.

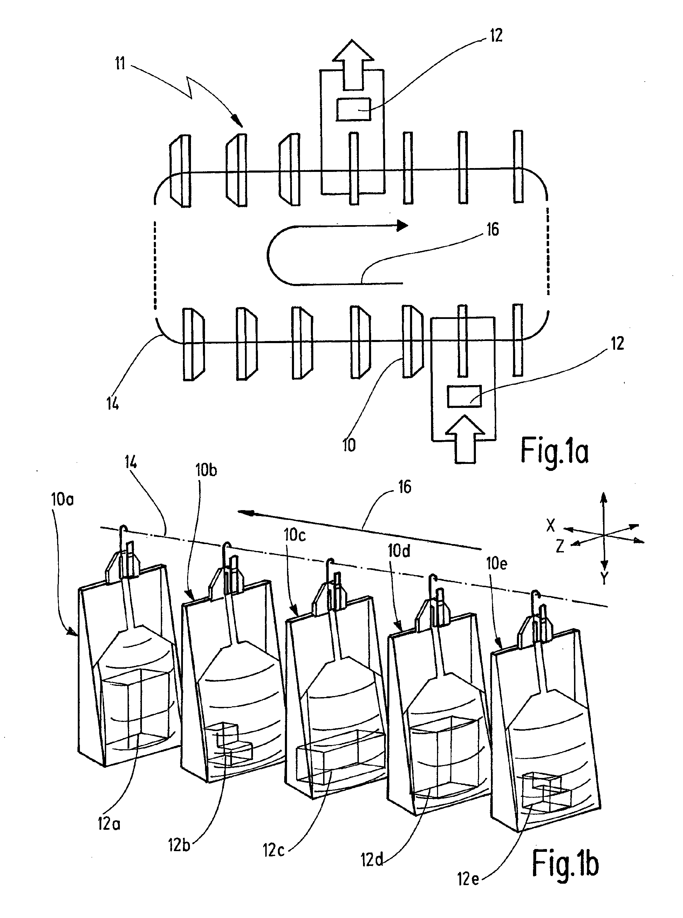

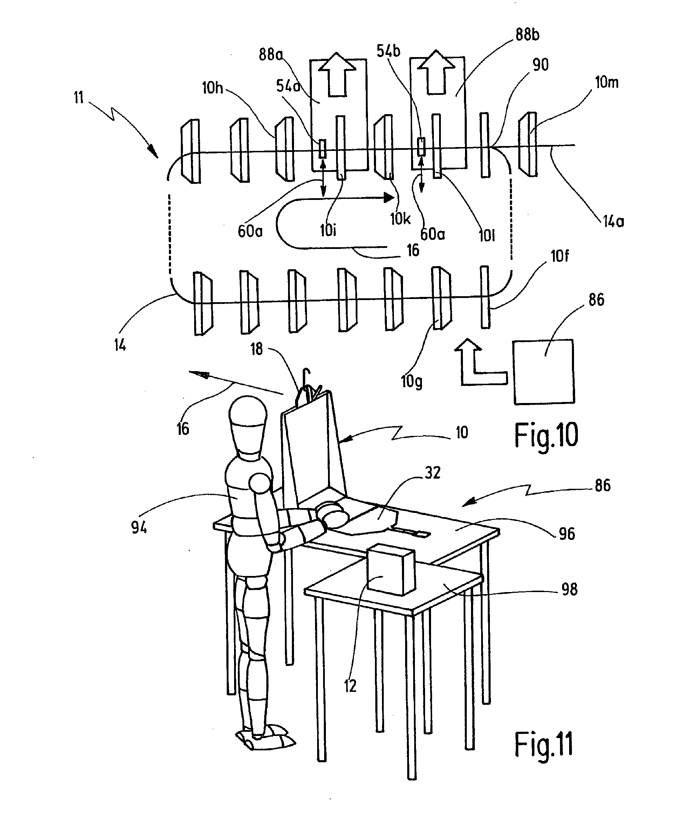

In Fig. 1a ist eine Förderanlage vereinfacht in einer Draufsicht dargestellt und insgesamt mit 11 bezeichnet. Die Förderanlage 11 dient zur Beförderung von Ladegütern 12 bzw. Stückgütern mit Transporttaschen 10 der Erfindung gemäß verschiedener Ausführungsformen. Die Transporttaschen 10 sind an einen Förderstrang 14 koppelbar und können entlang eines Förderpfades, der durch einen mit 16 bezeichneten Pfeil angedeutet ist, bewegt werden. Zur näheren Erläuterung einer beispielhaften Ausgestaltung der Förderanlage 11 wird auf Fig. 10 verwiesen.

In Fig. 1b ist eine Mehrzahl von Transporttaschen 10a, 10b, 10c, 10d, 10e einer ersten Ausführungsform der Erfindung perspektivisch dargestellt. Die Transporttaschen 10 sind identisch ausgebildet und können nachfolgend auch kurz als "Tasche" bezeichnet werden. Die Transporttaschen 10a bis 10e sind an den Förderstrang 14 (durch strichpunktierte Linie angedeutet) gekoppelt und werden entlang des Förderpfades 16 in einer Längsrichtung X transportiert. Eine seitliche Querrichtung, die im Wesentlichen senkrecht zu Förderrichtung X ist, ist mit Z, eine im Wesentlichen vertikale Richtung mit Y bezeichnet. Die Transporttaschen 10a bis 10e sind mit verschiedenen Stückgütern bzw. Fördergütern 12a, 12b, 12c, 12d, 12e beladen, die sich hinsichtlich Größe, Form und Ausrichtung deutlich voneinander unterscheiden können. Gleichwohl kann jedes der Fördergüter 12a bis 12e sicher von der jeweiligen Transporttasche 10a bis 10e aufgenommen und gehalten werden.

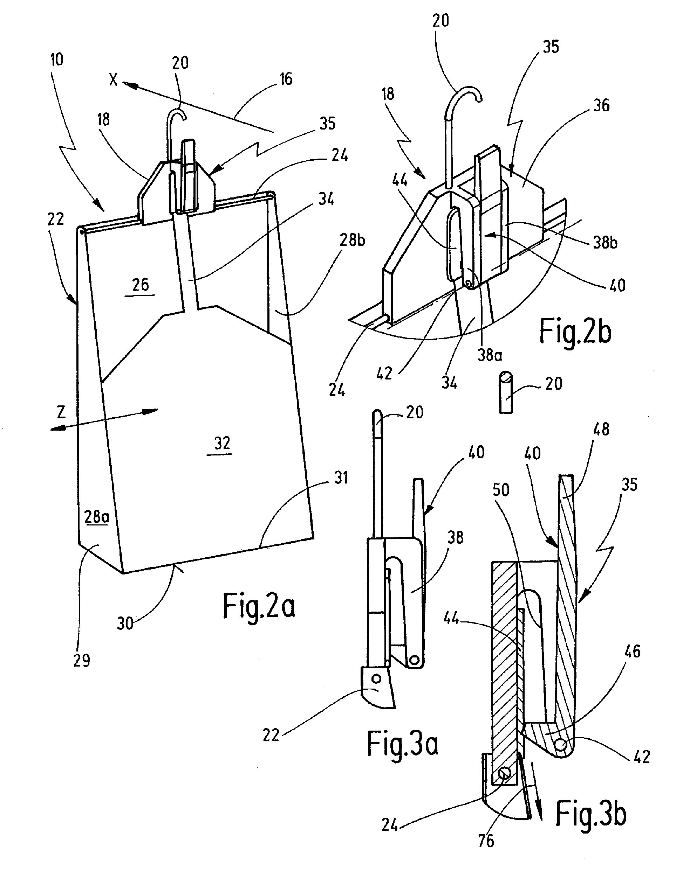

In Fig. 2a ist eine einzelne Transporttasche 10 perspektivisch dargestellt. Die Transporttasche 10 weist ein Trägerteil 18 auf, an dem eine vorliegend als Bügel dargestellte Aufnahme 20 angebracht ist, die zur Aufnahme der Transporttasche 10 am Förderstrang 14 ausgebildet ist. Ferner ist eine Klemmeinrichtung 35 vorgesehen, die zum Schließen und Sichern der Transporttasche 10 ausgebildet ist.

Das Trägerteil 18 dient als Träger für ein Ladehilfsmittel 22, das mit dem Trägerteil 18 vorzugsweise über ein Gestell 24, vorliegend als Steg angedeutet, verbunden ist. Das Ladehilfsmittel 22 weist eine Rückseite 26 auf, die üblicherweise im Förderpfad 16 in Längsrichtung X stromabwärts orientiert ist. Unter "stromabwärts" wird etwa eine übliche Bewegungsrichtung des Fördergutes 12 entlang des Förderpfades 16 in der Förderanlage 11 von einer Beladestation zu einer Entladestation verstanden, vgl. hierzu auch Fig. 10. Dementsprechend wird "stromaufwärts" als dazu entgegengerichtet verstanden werden.

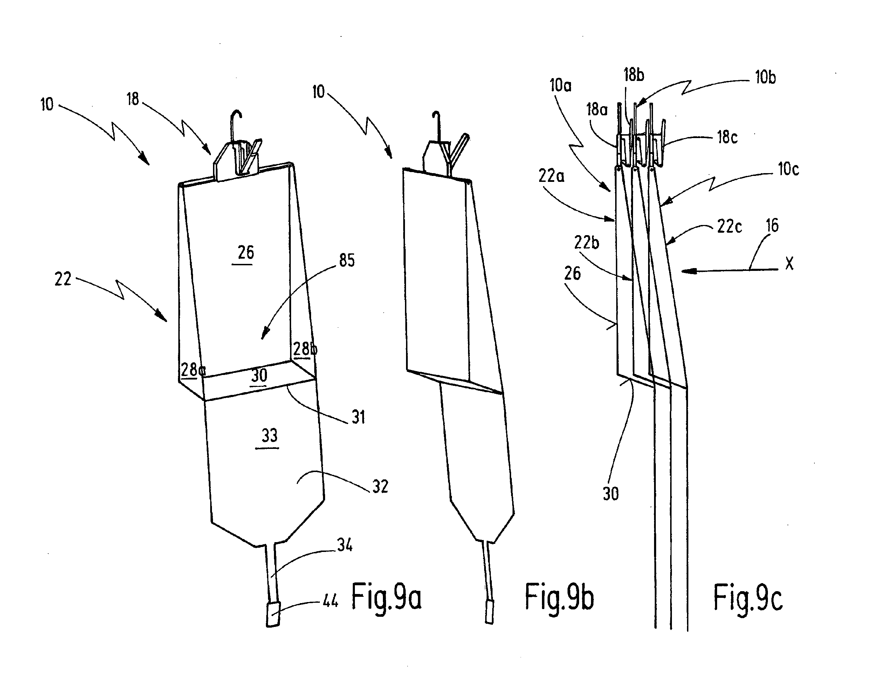

Das Ladehilfsmittel 22 kann ferner zwei Seitenwandungen 28, nämlich eine erste Seitenwandung 28a und eine zweite Seitenwandung 28b aufweisen. Die Seitenwandungen 28a, 28b können, seitlich in einer Querrichtung Z betrachtet, im Wesentlichen dreieckförmig oder trapezförmig ausgestaltet sein. Die Rückseite 26 weist vorliegend eine im Wesentlichen rechteckige Form auf, kann aber ebenso trapezförmig, dreieckig, oval, kreisförmig, kreisabschnittsförmig oder ähnlich ausgestaltet sein und insbesondere abgerundete Eckbereiche aufweisen. In einem Bodenbereich 29 kann das Ladehilfsmittel 22 eine Bodenwandung 30 aufweisen, vgl. auch Fig. 9a. An der Bodenwandung 30 ist dann eine Bodenkante 31 vorgesehen, an der eine Verschlussklappe 32 angebunden sein kann. Vorliegend ist das Ladehilfsmittel 22 insbesondere aus Veranschaulichungsgründen überwiegend scharfkantig dargestellt.

Es versteht sich ohne Weiteres, dass insbesondere dann, wenn das Ladehilfsmittel 22 zu wesentlichen Teilen aus einem Gewebe, etwa einem Stoff oder Tuch, gefertigt ist, eine Gestaltung mit weichen Übergängen und abgerundeten Ecken gegeben sein kann. Daneben kann das Ladehilfsmittel 22 zusätzlich oder alternativ über eine Gestellstruktur oder Rahmenstruktur verfügen, die vorliegend nicht detailliert dargestellt ist. Das Ladehilfsmittel 22 kann auch ohne Seitenwände 28 und Boden 30 ausgeführt sein, so dass das Ladehilfsmittel 22 im Wesentlichen aus einer Gewebe-(Bahn) besteht, die im geschlossenen Zustand der Tasche 10 seitlich in der Querrichtung Z betrachtet etwa einen V-förmigen bzw. U-förmigen Querschnitt oder Verlauf aufweist.

Die Verschlussklappe 32 des Ladehilfsmittels 22 kann über eine Handhabungslasche 34 am Trägerteil 18 der Transporttasche 10 festgelegt sein. Die Lasche 34 ist aber nicht zwingend erforderlich. Die Klappe 32 kann auch direkt festgelegt sein. In einem solchen Zustand ist die Transporttasche 10 verschlossen. In Zusammenschau wird aus den Fig. 2b, 3a und 3b ersichtlich, dass die Handhabungslasche 34 durch die Klemmeinrichtung 35 mit einen Klemmhebel 40 geklemmt wird, der an einem Ausleger 38, vorliegend z.B. zwei Auslegerarmen 38a, 38b, an einer Grundplatte 36 des Trägerteils 18 aufgenommen sein kann. Der Klemmhebel 40 ist um eine Hebelachse 42 verschwenkbar, die am Ausleger 38 aufgenommen ist. Die Hebelachse 42 ist üblicherweise im Wesentlichen senkrecht zur Längsrichtung bzw. Transportrichtung X orientiert.

Die Handhabungslasche 34 weist zum Klemmen einen Klemmabschnitt 44 auf, auf den ein Klemmarm 46 des Klemmhebels 40 in Richtung der Grundplatte 36 einwirken kann. Der Ausleger 38 erstreckt sich unter Ausbildung eines Halteraums 50 aus der Grundplatte 36 des Trägerteils 18. Am Klemmhebel 40 ist ferner ein Betätigungsarm 48 vorgesehen. Der Betätigungsarm 48 ist wesentlich länger als der Klemmarm 46 ausgeführt, somit können mit verhältnismäßig geringen Betätigungskräften hohe Lösekräfte bewirkt werden. Die kann etwa dann von Vorteil sein, wenn eine hohe Haltekraft auf den Klemmabschnitt 44 der Handhabungslasche 34 der Verschlussklappe 32 einwirkt und einem Lösen der Verbindung entgegensteht. Somit kann die Klemmung ohne Weiteres in einfacher Weise gelöst werden, um den Klemmabschnitt 44 freizugeben. Der Klemmarm 46 und der Betätigungsarm 48 können sich jeweils im Wesentlichen radial von der Hebelachse 42 aus erstrecken.

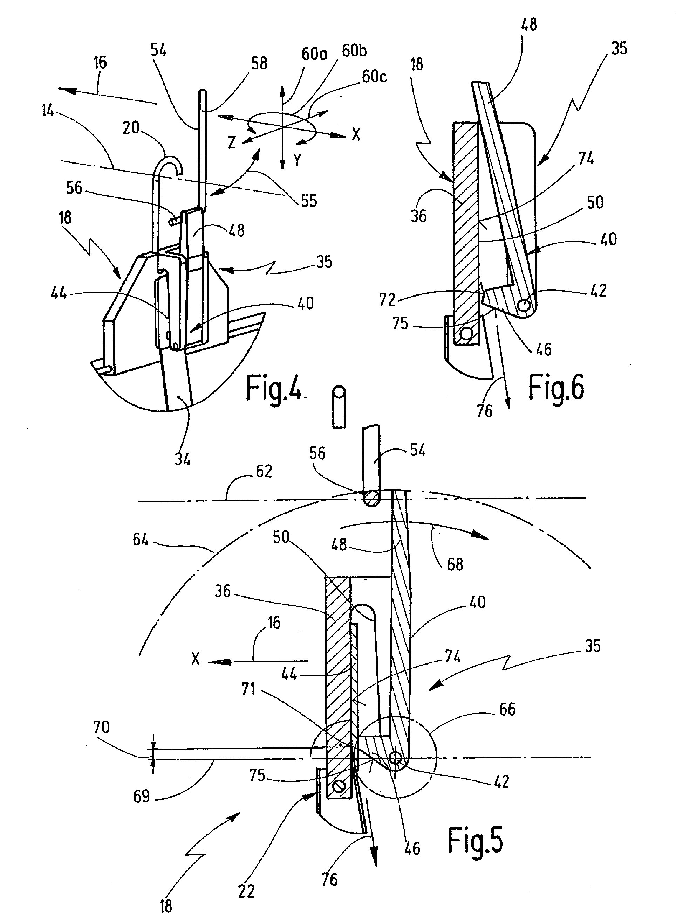

Der Klemmarm 46 und der Betätigungsarm 48 können zueinander winklig angeordnet sein, insbesondere einen Winkel von etwa 90° aufweisen. Dies kann etwa dann von Vorteil sein, wenn die Klemmeinrichtung 35 dazu ausgebildet ist, über den Betätigungsarm 48 mit einem Betätigungsglied 56 zusammenzuwirken, das in den Förderpfad 16 eingebracht wird, vgl. auch Fig. 4. Der Betätigungsarm 48 kann vorteilhaft etwa senkrecht zum Förderpfad 16 orientiert sein, so dass eine Betätigungskraft ebenso im Wesentlichen senkrecht darauf einwirkt. Wenn der Klemmarm 46 im Wesentlichen in einem Winkel von 90° zum Betätigungsarm orientiert ist, kann sich für den Klemmarm 46 eine im Wesentlichen horizontale Orientierung ergeben, so dass grundsätzlich vertikale (z.B. entlang der Vertikalen Y nach unten gerichtete) Lasten zu hohen Klemmkräften bzw. Haltekräften führen können.

Die Gestaltung des Hebels 40 kann eine Selbstsicherung dergestalt bewirken, dass in einer Haltestellung (vgl. Fig. 3b) des Klemmhebels 40 eine Last (üblicherweise schwerkraftbedingt) an der Handhabungslasche 34, die darauf gerichtet ist, den Klemmabschnitt 44 der Handhabungslasche 34 aus dem Halteraum 50 herauszuführen, zu einer Verstärkung der Klemmwirkung führt. Je höher die Last ist, desto größer ist die Klemmwirkung. Zur näheren Erläuterung dieser Funktionalität wird auf die nachfolgenden Figuren und die zugehörigen Beschreibungen verwiesen.

Der Handhabungsabschnitt 34 und/oder der Klemmabschnitt 44 können aus einem Gewebe gefertigt sein. Insbesondere der Klemmabschnitt 44 kann ferner mit einer Beschichtung versehen sein, die verschleißmindernd wirken kann und/oder eine Erhöhung der Reibung zwischen den beteiligten Komponenten bewirken kann. Ebenso ist eine Umspritzung mit einem Kunststoff oder Gummiwerkstoff, insbesondere einem thermoplastischen Elastomer, denkbar.

In Fig. 4 ist eine Ausgestaltung der Tasche 10 bzw. der Trägerteils 18 dargestellt, die im Wesentlichen der Ausgestaltung in Fig. 2b entspricht. Zusätzlich zum Trägerteil 18 ist dabei ein Betätigungsglied 54 dargestellt, das in den Förderpfad 16 einfahrbar ist (vgl. Pfeil 55), um mit dem Klemmhebel 40 zum Lösen der Haltestellung der Klemmeinrichtung 35 zusammenzuwirken.

Das Betätigungsglied 54 weist vorliegend einen Betätigungsfinger 56 und einen Schaft 58 auf. Der Finger 56 ist in seiner Löse-Stellung im Wesentlichen in der Z-Richtung orientiert. Andere Ausgestaltungen sind ohne Weiteres denkbar. Der Betätigungsfinger 56 kann den Klemmhebel 40 der vorbeifahrenden Transporttasche 10 im Bereich des Betätigungsarms 48 touchieren und um die Hebelachse 42 in Richtung auf eine Freigabestellung verschwenken. Das Einfahren des Betätigungsgliedes 54 in den Förderpfad 16 kann grundsätzlich etwa seitlich in der Querrichtung Z, von oben in der Vertikalrichtung Y, als Schwenkbewegung um eine beliebige Achse oder aber entlang einer kombinierten Bahnbewegung erfolgen. In Fig. 4 sind verschiedene Zuführbewegungen mit 60a, 60b, 60c angedeutet. Es versteht sich, dass das Betätigungsglied 54 vorteilhaft auch gezielt aus dem Förderpfad 16 herausbewegt werden kann, so dass kein Eingriff in den Klemmhebel 40 einer vorbeifahrenden Transporttasche 10 erfolgt. Somit kann eine vorbeifahrende Transporttasche 10 bewusst automatisiert geöffnet oder aber durchgelassen werden.

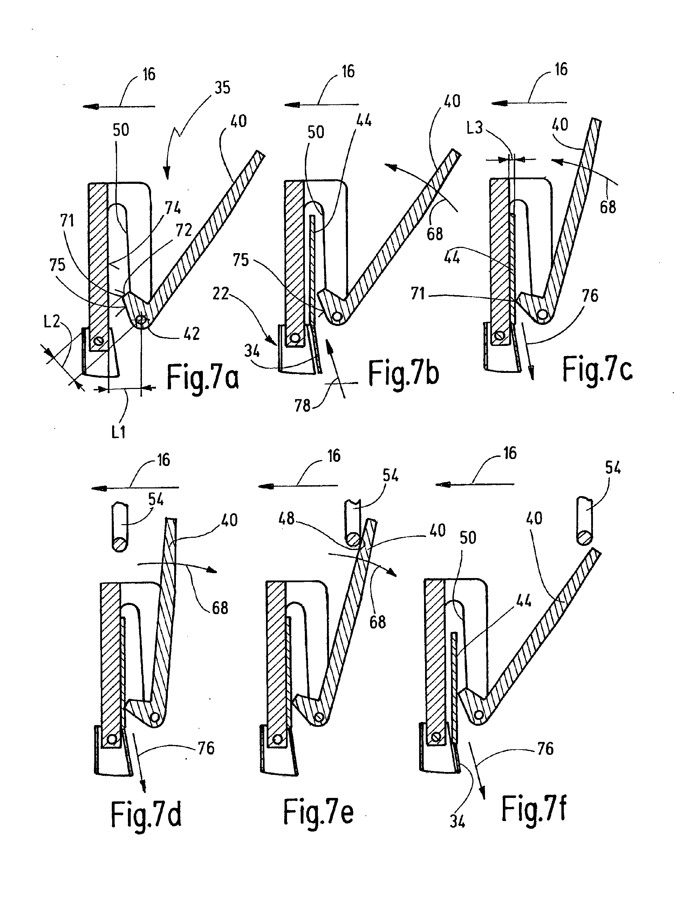

In Fig. 5 ist mit 62 eine Bewegungsbahn des Betätigungsglieds 54 relativ zu dem Trägerteil 18 mit der Klemmeinrichtung 35 einer vorbeifahrenden Transporttasche 10 angedeutet. Sich beim Verschwenken des Klemmhebels 40 aus der Haltestellung in Richtung auf die Freigabestellung ergebende Schwenkkurven des Betätigungsarms 48 und des Klemmarms 46 sind mit 64 und 66 angedeutet. Die Radien der Kurven 64, 66 können grundsätzlich den Längen des Klemmarms 46 und der Betätigungsarms 48 entsprechen. Die Bewegung des Trägerteils 18 in Längsrichtung X führt zu einem mit 68 angedeuteten Verschwenken des Hebels 40 bzw. dessen Betätigungsarms 48 und infolgedessen zur Freigabe des Klemmabschnitts 44 der Handhabungslasche 34. In umgekehrter Weise führt ein Verschwenken des Klemmhebels 40 in der Gegenrichtung, vgl. etwa Fig. 7b und 7c, zum Festklemmen des in den Halteraum 50 eingebrachten Klemmabschnitts 44. Ein Zug in einer Soll-Löserichtung 76, der vorzugsweise durch die Schwerkraft hervorgerufen wird, führt dabei zu erhöhten Haltekräften am Klemmabschnitt 44.

Die Selbstsicherung beruht in erster Linie darauf, dass eine Kontaktstelle 71 zwischen dem Klemmarm 46 des Klemmhebels 40 und dem Klemmabschnitt 44 der Betätigungslasche 34 im Wesentlichen oberhalb des Niveaus der Hebelachse 42 angeordnet ist.

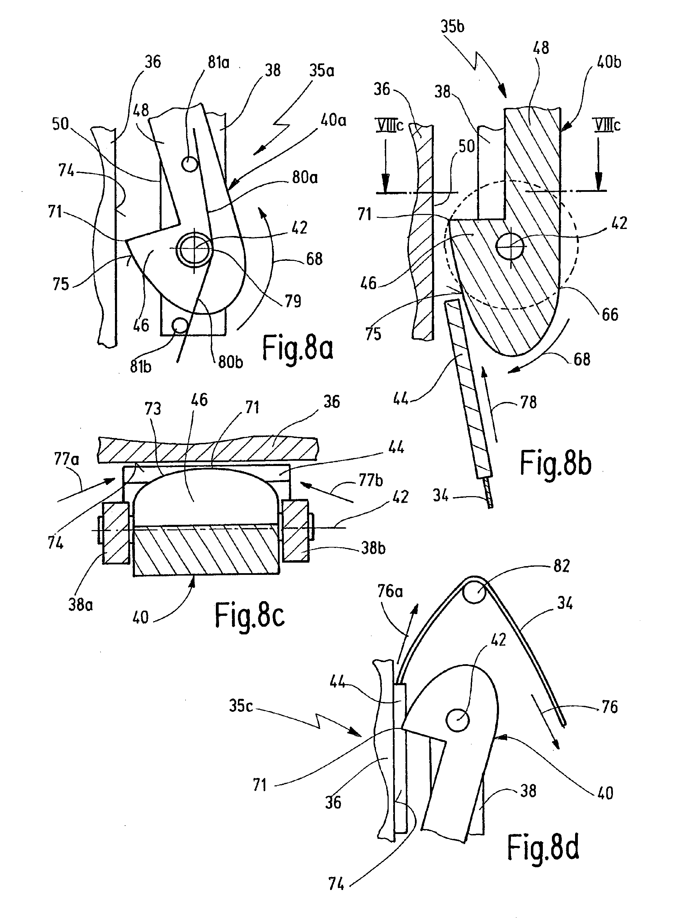

Zur Veranschaulichung eines vertikalen Abstands 70 ist in Fig. 5 ferner eine Normale 69 einer Gegenfläche 74 der Grundplatte 36 dargestellt, die durch die Hebelachse 42 verläuft. Die Gegenfläche 74 ist die Fläche der Grundplatte 36, gegen die der Klemmabschnitt 44 in der Haltestellung von einer Stirnfläche 72 des Klemmarms 46 des Klemmhebels 40 gedrückt bzw. gepresst wird. Wie eingangs bereits erwähnt, sind die Begriffe "oberhalb" bzw. "unterhalb" nicht einschränkend zu verstehen. So können etwa die in Fig. 5 gezeigten Komponenten ohne Weiteres beispielsweise um 90° oder gar 180° gedreht angeordnet sein, wenn die Handhabungslasche 34, an der der Klemmabschnitt 44 angebracht ist, z.B. über eine (hier nicht dargestellte) Umlenkrolle geführt wird, vgl. hierzu auch Fig. 8d. Auch bei einer derartigen Konfiguration lässt sich der Abstand 70 unter Berücksichtigung der Normalen 69 der Gegenfläche 74 ermitteln.

In Fig. 6 ist die Klemmeinrichtung 35 in einer Stellung gezeigt, in der der Klemmhebel 40 derart ausgelenkt ist, dass die Stirnfläche 72 sehr nahe an die Gegenfläche 74 heranrückt. In dieser Stellung kann eine sehr hohe Klemmkraft auf den Klemmabschnitt 44 (in Fig. 6 nicht separat dargestellt) einwirken. Um Übermäßige Klemmkräfte zu vermeiden und etwa eine Überlastsicherung zu ermöglichen, kann etwa ein Anschlag für den Hebel 40 vorgesehen sein, bei dem der Abstand zwischen der Stirnfläche 72 und der Gegenfläche 74 nicht beliebig klein werden kann, sondern zumindest einen bestimmten Wert annimmt. In Fig. 6 kann dazu etwa der Betätigungsarm 48 des Hebels 40 im oberen Bereich an der Grundplatte 36 zur Anlage kommen. Alternativ oder zusätzlich können der Schwenkkreis 66 des Klemmarms 46 und der Abstand der Hebelachse 42 von der Gegenfläche 74 aufeinander abgestimmt werden, so dass auch bei hohen Zugkräften am Klemmabschnitt 44 eine gewisse Lücke zwischen der Stirnfläche 72 und der Gegenfläche 74 verbleibt. Dies kann zum Durchrutschen des Klemmabschnitts 44 bei übermäßig hohen Lasten führen, insbesondere im Sinne einer Sicherung gegen unerwünschte Betriebszuständen. Umgekehrt kann jedoch der Schwenkkreis 66 (also die Länge) des Klemmarms 46 so gewählt werden, dass bei hohen Lasten eine (gedachte) Anlage des Klemmarms 46 an der Gegenfläche 74 möglich wird. Auf diese Weise können sehr hohe Klemmkräfte auf den zwischengeschalteten Klemmabschnitt 44 einwirken.

Der Klemmhebel 40 in Fig. 6 weist ferner am Klemmarm 46 eine Mitnahmefläche 75 auf, an der ein in den Halteraum 50 einzuführender Klemmabschnitt 44 (in Fig. 5 nicht dargestellt) angreifen kann, um den Klemmhebel 40 in Richtung auf die Freigabestellung zu verschwenken. Somit kann das Einführen des Klemmabschnitts 44 erfolgen, ohne dass eine separate Betätigung zum Umlegen des Klemmhebels 40 erforderlich ist. Alternativ kann der Klemmhebel 40 vor dem Einführen des Klemmabschnitts 44 manuell oder automatisiert über den Betätigungsarm 48 umgelegt werden.

Das Klemmen bzw. Freigeben des Klemmabschnitts 44 ist anschaulich in den Fig. 7a bis 7f dargestellt. Der Pfeil 16 deutet an, dass die Transporttasche 10 kontinuierlich entlang des Förderpfads 16 verfahren werden kann.

In Fig. 7a befindet sich der Hebel 40 in einer Freigabestellung. Der Halteraum 50 ist leer. Es besteht kein Kontakt zwischen einer Kontaktstelle 71 bzw. der Stirnfläche 72 und der Gegenfläche 74.

In Fig. 7b ist der Halteabschnitt 44 der Handhabungslasche 34 entlang einer Soll-Einführrichtung 78 in den Halteraum 50 eingeführt. Es erfolgt noch keine Klemmung. Der Klemmhebel 40 ist jedoch bereits ausgehend von der Ausgangsstellung 40 in Fig. 7a entlang des Pfeils 68 etwas in Richtung der Haltestellung verschwenkt.

In Fig. 7c führt weiteres Verschwenken entlang des Pfeils 68 dazu, dass der Klemmhebel 40 an der Kontaktstelle 71 mit dem Klemmabschnitt 44 in Kontakt tritt. Es kann somit bereits in Fig. 7c eine Selbstsicherung gegeben sein, bei der ein Zug am Klemmabschnitt 44 in Richtung der Soll-Löserichtung 76 zu einer umso stärkeren Klemmung führt. Die Soll-Löserichtung 76 und die SollEinführrichtung 78 sind als einander im Wesentlichen entgegengerichtet zu verstehen.

Anhand der Fig. 7a und 7c kann das Verhältnis zwischen einem Abstand L1 zwischen der Klemmachse 42 und der Gegenfläche 74, einer Länge L2 des Klemmarms 46 und einer Dicke L3 des Klemmabschnitts 44 erläutert werden. Solange dabei die Summe aus L2 und L3 größer als L1 ist und die Kontaktstelle 71 "oberhalb" der Klemmachse 42 angeordnet ist, kann der Klemmarm 46 nicht "durchrutschen". Eine Erhöhung einer Last am Klemmarm 46 führt demnach zu einer Erhöhung der Haltekraft.

Auch in Fig. 7d liegt ein solcher Zustand zugrunde. Entlang des Förderpfades 16 erscheint jedoch nun das Betätigungsglied 54, das dazu vorgesehen ist, den Hebel 40 in Richtung des Pfeils 68 ausgehend von der Haltestellung in Richtung der Freigabestellung zu verschwenken.

In Fig. 7e kontaktiert das Betätigungsglied 54 den Betätigungsarm 48 des Hebels 40, der bereits um einen gewissen Grad in Richtung des Pfeils 68 verschwenkt ist.

Schließlich befindet sich in Fig. 7f der Hebel 40 analog zur Fig. 7a wiederum in der Freigabestellung. Nunmehr kann der Klemmabschnitt 44 ohne Weiteres durch Zug an der Handhabungslasche 34 in Richtung der Soll-Löserichtung 76 aus dem Halteraum 50 herausgeführt werden.

Das in den Fig. 7a bis 7c gezeigte Überführen des Hebels 40 in die Haltestellung (Fig. 7d) kann grundsätzlich in einfacher Weise auch manuell durch einen Bediener erfolgen. Das Hebelverhältnis am Hebel 40 und die Selbstsicherung erlauben insbesondere geringe Betätigungskräfte, die trotzdem zu einem sicheren Festklemmen des Klemmabschnitts 44 führen.

Fig. 8a zeigt eine alternative Klemmeinrichtung 35a, die ein Element zur Erzeugung einer Vorspannung aufweist. Der Klemmhebel 42a ist mit einer Feder 79 gekoppelt, die über ihren Schenkel 80a auf den Hebel 42a einwirkt. Der Schenkel 80a liegt an einer Anlage 81a, etwa einem Stift, des Hebels 40a an. Ein anderer Schenkel 80b der Feder 79 liegt an einer Anlage 81b an, die am Ausleger 38 aufgenommen ist. Die Feder 79 kann als Schenkelfeder, Blattfeder oder ähnliches ausgebildet sein. Alternativ können im Wesentlichen linear wirkende Vorspannelemente, etwa Zugfedern oder Druckfedern, vorgesehen sein. Die Feder 79 bewirkt eine Vorspannung des Klemmhebels 40. Der Klemmhebel 40 wird durch die Federkraft selbststätig in Richtung der Haltestellung bewegt, vgl. den Pfeil 68. Es kann sich dabei eine definierte Soll-Lage des Klemmhebels 40 ergeben.

Eine solche Ausgestaltung kann sich insbesondere dann empfehlen, wenn am Klemmarm 46 eine Mitnahmefläche 75 vorgesehen ist, vgl. etwa Fig. 6 und Fig. 7a. Wenn beim Einführen des Klemmabschnitts 44 (in Fig. 8a nicht dargestellt) in den Halteraum 50 die Vorspannkraft auf den Klemmhebel 40 einwirkt, bedarf es bei einer vorteilhaften Ausgestaltung keiner gesonderten Verriegelungsbewegung am Klemmhebel 40. Vielmehr kann bereits das Einführen des Klemmabschnitts 44 zur Klemmung genügen, da durch die Vorspannung des Klemmhebels 40 bereits dann ein Kontakt zwischen der Kontaktstelle 71 und dem Klemmabschnitt 44 gewährleitstet ist. Eine solche Ausgestaltung kann grundsätzlich bei allem hier gezeigten Klemmhebeln 40 vorgesehen werden.

In den Fig. 8b und 8c ist eine weitere Klemmeinrichtung 35b gebrochen dargestellt. Der Halteabschnitt 44 kann entlang der Soll-Einführrichtung 78 in den Halteraum 50 eingeführt werden. Der Klemmhebel 40b weist einen Klemmarm 46 mit einer bogenförmig verlaufenden Haltekante 73 auf, vgl. Fig. 8c. Auch die Mitnahmefläche 75 des Klemmarms 46 kann in ähnlicher Weise abgerundet sein. Somit kann der Klemmabschnitt 44 grundsätzlich auch seitlich in den Halteraum 50 eingeführt werden, wie in Fig. 8c durch mit 77a, 77b bezeichnete Pfeile angedeutet ist. Anders gesagt, kann der Klemmhebel 40b dazu ausgestaltet sein, dass der Halteabschnitt 44 sowohl "von unten" als auch "seitlich" bzw. "seitlich schräg von unten" eingeführt werden kann.

Die Bedienergonomie kann beim Verriegeln deutlich verbessert werden, da etwa ein Bediener auch bei abweichenden Zuführbewegungsrichtungen die Transporttasche 10 sicher verriegeln kann. In vorteilhafter Weise kann eine solche Ausgestaltung mit der Feder 79 zur Erzeugung einer Vorspannung am Klemmhebel 40 kombiniert werden.

In Fig. 8d ist eine Klemmeinrichtung 35c gezeigt, bei der die Handhabungslasche 34 über eine Umlenkrolle 82 zum Klemmhebel 40 geführt wird. Eine im Wesentlichen nach unten gerichtete Soll-Löserichtung 76 wird in eine im Wesentlichen nach oben gerichtete Soll-Löserichtung 76a gewandelt. Auch bei dieser Anordnung kann eine sichere Klemmung bewirkt werden, indem die Kontaktstelle 71 unterhalb der Klemmachse 42 angeordnet ist. Mit anderen Worten kann die Klemmeinrichtung 35c als im Wesentlichen horizontal gespiegelte Klemmeinrichtung 35 aufgefasst werden.

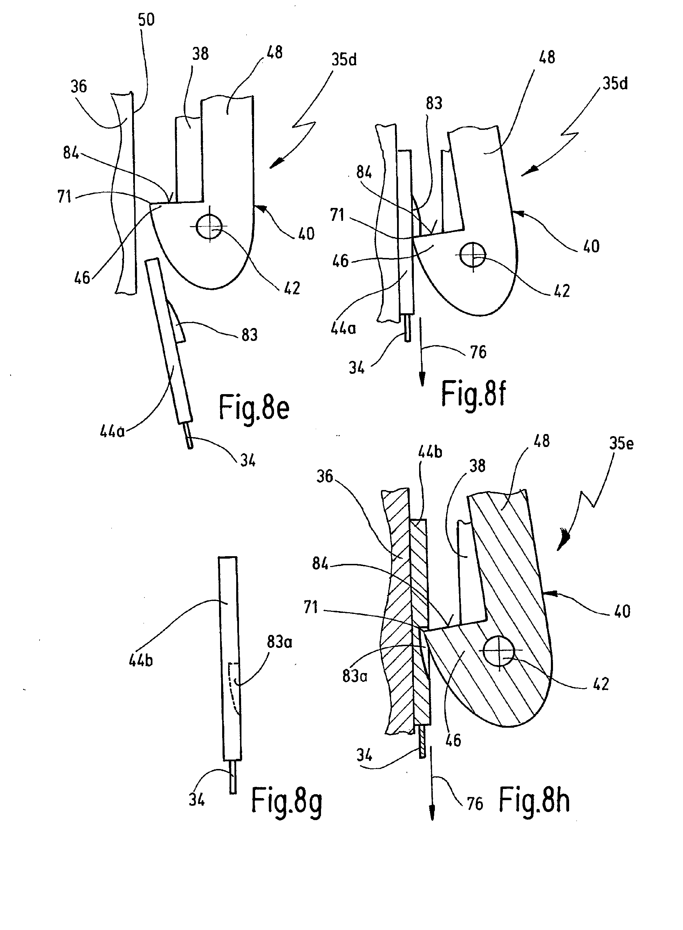

Fig. 8e und 8f zeigen eine Klemmeinrichtung 35d, bei dem am Klemmabschnitt 44a zumindest ein Formschlusselement 83 vorgesehen ist. Es kann sich beim Formschlusselement 83 etwa um eine Nase oder partielle Aufdickung handeln. Der Klemmarm 46 des Klemmhebels 40 weist ein damit korrespondierendes Formschlussgegenelement 84 auf. Vorteilhaft können sowohl das Formschlusselement 83 als auch das Formschlussgegenelement 84 dazu ausgebildet sein, ein Einführen des Klemmabschnitts 44a in den Halteraum 50 zu fördern. Dies kann etwa mittels geeigneter Einführschrägen erfolgen. In Fig. 8f wirken das Formschlusselement 83 und das Formschlussgegenelement 84 (zusätzlich) zusammen. In dieser Konfiguration kann die gegen das Lösen des Klemmabschnitts 44a wirkende Haltekraft deutlich erhöht sein. Einem Zug an der Handhabungslasche 34 in der Haltestellung in Richtung der Soll-Löserichtung 76 kann somit eine Haltekraft mit einer Reibschlusskomponente (Klemmkraft) und einer Formschlusskomponente entgegenwirken.

Die Fig. 8g und 8h zeigen eine den Fig. 8e und 8f grundsätzlich ähnliche Gestaltung einer Klemmeinrichtung 35e. Das Formschlusselement 83a auf dem Klemmabschnitt 44b ist alternativ als Vertiefung bzw. Ausnehmung ausgebildet, in die das Formschlussgegenelement 84 am Klemmhebel 40 eingreift. Es kann sich dabei der Vorteil ergeben, dass sich bei geringer Last an der Handhabungslasche 34 nur eine geringe Klemmkraft zwischen der Kontaktstelle 71 des Klemmarms 46 und dem Klemmabschnitt 44b ergibt. Der Klemmabschnitt 44b ist in der Haltestellung durch die Vertiefung oder Ausnehmung gewissermaßen entlastet.

Daneben ist es ebenso denkbar, alternative Formschlusselemente 83, wie Hinterschneidungen, Widerhaken, Tannenbaumprofile oder Ähnliches, vorzusehen. Dies kann grundsätzlich am Klemmabschnitt 44, dem Klemmarm 46 und/oder der Grundplatte 36 mit der Gegenfläche 74 erfolgen.

In den Fig. 9a und 9b ist die Transporttasche 10 analog zu Fig. 2a dargestellt, jedoch in einer geöffneten Konfiguration. Die Verschlussklappe 32 weist eine Grundfläche 33 auf, die über die Bodenkante 31 mit der Bodenwandung 30 des Ladehilfsmittels 22 verbunden sein kann. Eine solche Konfiguration, also eine nicht bestückte, geöffnete Transporttasche 10 kann ohne Weiteres etwa visuell von einem Bediener oder messtechnisch mit einem optischen Sensor erfasst werden.

In der geöffneten Konfiguration des Ladehilfsmittels 22 bilden die Rückseite 26, die Seitenwandungen 28a, 28b und die Bodenwandung 30 einen nach außen geöffneten (Transport-)Raum oder Hohlraum 85. Der Raum 85 kann genutzt werden, um eine Mehrzahl von Transporttaschen 10a, 10b, 10c, vgl. Fig. 9c, besonders platzsparend zu stapeln bzw. zu lagern. In dem in Fig. 9c gezeigten Stapel sind insgesamt drei Transporttaschen 10a, 10b, 10c ineinander gestapelt. Dabei bildet ein erstes Ladehilfsmittel 22a einen Hohlraum 85, in den ein zweites Ladehilfsmittel 22b eingefahren ist. Das zweite Ladehilfsmittel 22b bildet wiederum einen Hohlraum 85, in dem das dritte Ladehilfsmittel 22c eingefahren ist. Aus Fig. 9c ist ferner ersichtlich, dass die Stapellänge im Wesentlichen durch die Erstreckung der jeweiligen Trägerteile 18a, 18b, 18c in der Längsrichtung X bestimmt ist. Um das Ineinandereinfahren der Transporttaschen 10a, 10b, 10c zu erleichtern, ist es bevorzugt, wenn die Seitenwände 28 der Ladehilfsmittel 22a, 22b, 22c jeweils in Richtung auf die Rückseite 26 verjüngt sind. Auch eine entsprechende Neigung der Bodenwandung 30 kann die Stapelfähigkeit günstig beeinflussen.

In Fig. 10 wird die auf der Darstellung in Fig. 1a beruhende beispielhafte Förderanlage 11 stark vereinfacht schematisch in einer Draufsicht dargestellt. Die Förderanlage11 weist eine Beladestation 86 und eine erste Entladestation 88a und eine zweite Entladestation 88b auf. In der Förderanlage 11 sind Transporttaschen 10f, 10g, 10h, 10i, 10k, 101, 10m vorgesehen, die entlang des mit 16 angedeuteten Förderpfads transportiert werden. Dabei dient die Beladestation 86 dem Befüllen bzw. Beschicken der Transporttaschen 10f bis 10m. Mit 10f ist eine leere Transporttasche angedeutet. 10g und 10h veranschaulichen beschickte Transporttaschen.

Die Förderanlage 11 weist ferner ein Betätigungsglied 54a auf, das der Entladestation 88a zugeordnet ist, sowie ein Betätigungsglied 54b, das der Entladestation 88b zugeordnet ist. Die Betätigungsglieder 54a, 54b können selektiv angesteuert werden, um eine Transporttasche 10 wahlweise zu entladen oder aber passieren zu lassen (vergleiche dazu die mit 60a bezeichneten Pfeile in einer Querrichtung zum Förderpfad 16). Die Transporttasche 10i ist vom Betätigungsglied 54a im Bereich der ersten Entladestation 88a zum Entladen aktiviert worden. Die Transporttasche 10k hat die erste Entladestation 88a passiert, ohne zum Entladen aktiviert worden zu sein. Die Transporttasche 101 hingegen wurde vom Betätigungsglied 54b zum Entladen aktiviert.

Die Förderanlage 11 kann ferner eine Weiche 90 aufweisen, über die der Förderstrang 14 etwa mit einem weiteren Förderstrang 14a verknüpft sein kann. Die Transporttasche 10m wurde vom Förderstrang 14 in den Förderstrang 14a übertragen, ohne dass an der ersten Entladestation 88a oder der zweiten Entladestation 88b ein Entladevorgang erfolgt ist.

In Fig. 11 ist eine Beladestation 86 in stark vereinfachter Form perspektivisch dargestellt. Ein Bediener 94 ist zum manuellen Beladen der Transporttasche 10 abgestellt. Der Bediener 94 kann neben dem Beladen der Transporttasche 10 auch zum Erfassen von Daten, insbesondere Kommissionierdaten, eingesetzt werden. Hierunter kann etwa das Lesen oder Scannen von Codierungen oder Kennungen, etwa von Barcodes oder RFID-Chips, beispielsweise am Fördergut 12 oder an der Transporttasche 10, insbesondere am Trägerteil 18, fallen.

In Fig. 11 wird die Transporttasche 10 entlang des Förderpfades 16 am Bediener 94 vorbei transportiert. Dabei gleitet die Verschlussklappe 32 über eine Ladefläche 96 (z.B. einen Tisch). Ferner ist eine Bereitstellungsfläche 98 (etwa ein Rollenförderer) vorgesehen, auf der das Fördergut 12 zum Beladen bereitgestellt wird.

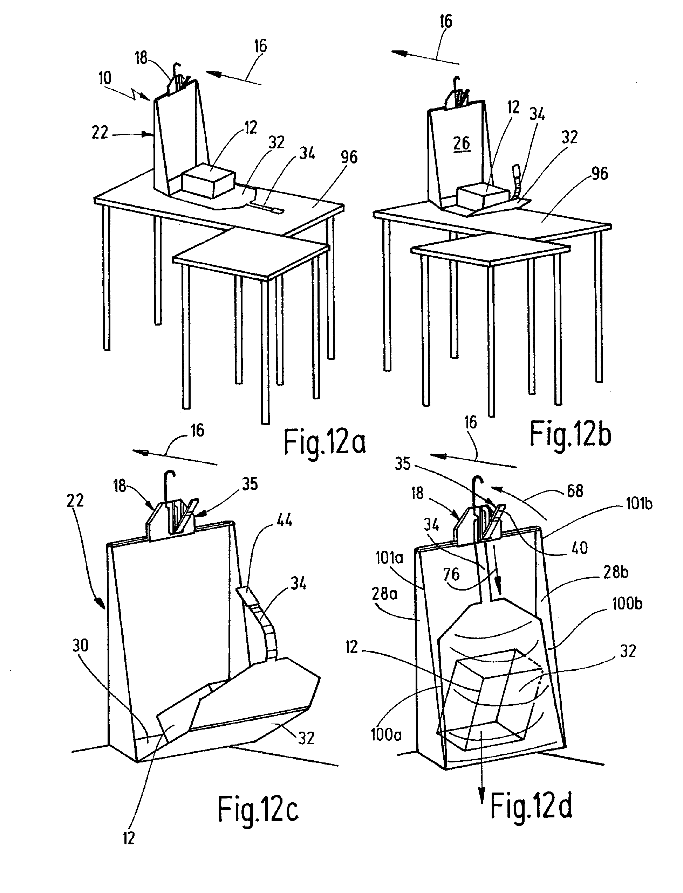

In den Fig. 12a bis 12d wird, ausgehend von Fig. 11, ein beispielhafter Beladevorgang veranschaulicht. Es versteht sich, dass das Beladen während einer kontinuierlichen Bewegung der Transporttasche 10 über die Ladefläche 96 erfolgen kann.

In Fig. 12a ist das Fördergut 12 auf der Verschlussklappe 32 abgelegt und gleitet auf dieser entlang der Ladefläche 96. In Fig. 12b ist die Handhabungslasche 34 angehoben, die Verschlussklappe 32 beginnt sich von der Ladefläche 96 zu lösen. Das Fördergut 12 wird in Richtung auf den Hohlraum oder Innenraum 85 des Ladehilfsmittels 22 verschoben. In Fig. 12c ist die Verschlussklappe 32 bereits vollständig (etwa durch den Bediener 94) angehoben wurden, infolgedessen "rutscht" das Fördergut 12 in Richtung auf die Bodenwandung 30 des Ladehilfsmittels 22. Die Handhabungslasche 34 mit dem Klemmabschnitt 44 wird in Richtung des Trägerteils 18 bewegt. Schließlich ist in Fig. 12d der Klemmabschnitt 44 bereits in den Halteraum 50 eingebracht, vgl. etwa Fig. 7b. Ein Verschwenken des Klemmhebels 40 entlang des Pfeils 68 in Richtung der Haltestellung kann die Transporttasche 10 verriegeln und somit das Fördergut 12 in seiner Transportlage sichern. Dabei kann die Verschlussklappe 32 abhängig von der Geometrie des Förderguts 12 mehr oder weniger "ausgebaucht" sein, wie in Fig. 12d angedeutet ist.

Das Verschwenken kann in einfacher Weise durch den Bediener 94 erfolgen, oder zumindest eingeleitet werden. Es ist ebenso denkbar, dass eine Feder 79 oder dgl., wie in Fig. 8a dargestellt, den Klemmhebel 40 selbststätig in Richtung der Haltestellung verschwenkt. Somit könnte sich die Aufgabe des Bedieners 94 bei der Verriegelung darauf beschränken, den Halteabschnitt 44 in den Halteraum 50 einzuführen und ggf. kurz daran zu ziehen. Auf diese Weise kann gleichzeitig die Klemmung erfolgen.

Das Eigengewicht des Fördergutes 12, vgl. einen Gewichtskraftvektor g̅, sichert einerseits die Haltestellung des Klemmhebels 40 und versteift andererseits die erste Seitenwandung 28a und die zweite Seitenwandung 28b am Ladehilfsmittel 22, soweit diese vorgesehen sind. Somit ist das Fördergut 12 in einfacher Weise wirksam gegen seitliches Herausfallen geschützt. Dies gilt insbesondere auch dann, wenn zwischen Seitenkanten 100a, 100b der Verschlussklappe 32 und Seitenkanten 101a, 101b der Seitenwände 28a, 28b keine Verbindung besteht. Eine solche Gestaltung ermöglicht ebenso die Aufnahme sehr großer Fördergüter 12.

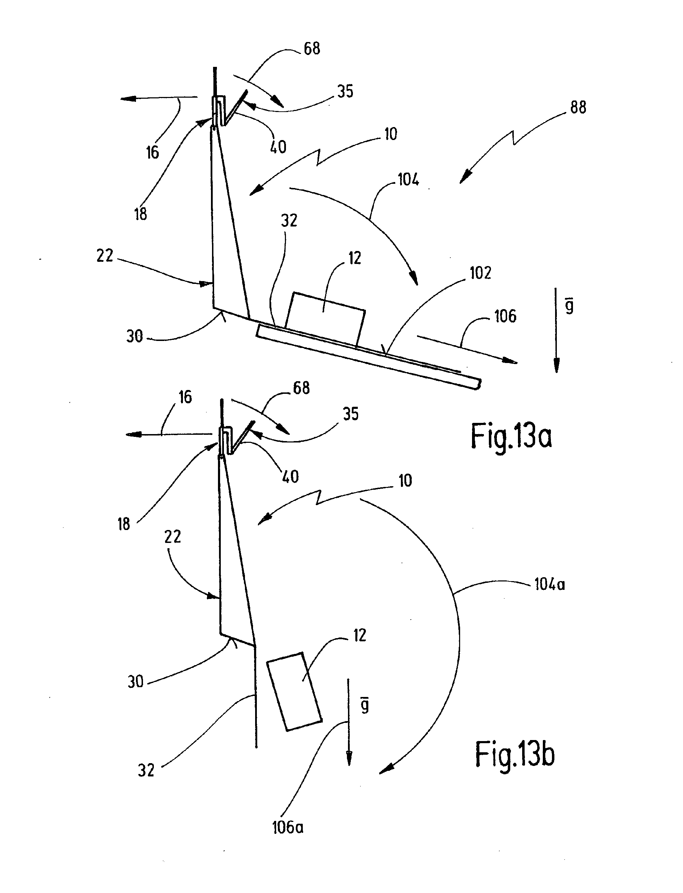

In den Fig. 13a und 13b sind zwei alternative Möglichkeiten zum Entladen der Transporttasche 10 dargestellt. Unmittelbar vor einem Entladevorgang ist jeweils eine Entriegelung des Klemmhebels 40 zur Freigabe der Verschlussklappe 32 erfolgt, etwa analog der Fig. 7d bis 7f.

In Fig. 13a gleitet die Transporttasche 10 auf ihrem Weg entlang des Förderpfades 16 entlang einer geneigten Entladefläche 102. Nach der Freigabe durch den Klemmhebel 40 ist die Verschlussklappe 32, wie durch den Pfeil 104 angedeutet, aufgeschwenkt und an der Entladefläche 102 zur Anlage gekommen. Bei ausreichender Neigung der Entladefläche 102 kann das Fördergut 12 selbsttätig entlang der Verschlussklappe 32 von der Transporttasche 10 rutschen, vgl. den Pfeil 106. Eine entsprechende Neigung der Bodenwandung 30 kann diesen Vorgang unterstützen. In den Fig. 13a und 13b ist jeweils die Richtung der Gewichtskraft g durch einen Pfeil angedeutet.

In Fig. 13b ist keine Entladefläche 102 vorgesehen, auf der die Verschlussklappe 32 gleiten kann. Vielmehr ist eine lichte Höhe unter der Transporttasche 10 vorhanden, so dass die Verschlussklappe 32 vorzugsweise vollständig nach unten aufklappen kann, vgl. den Pfeil 104a. Somit kann das Fördergut 12 im Wesentlichen "im freien Fall" aus der Transporttasche 10 austreten, vgl. hierzu den Pfeil 106a, der im Wesentlichen der Richtung der Gewichtskraft g entspricht. Danach kann die Transporttasche 10 etwa gemeinsam mit weiteren Transporttaschen 10 zu einem kompakten Päckchen gestapelt werden, vgl. etwa Fig. 9c.

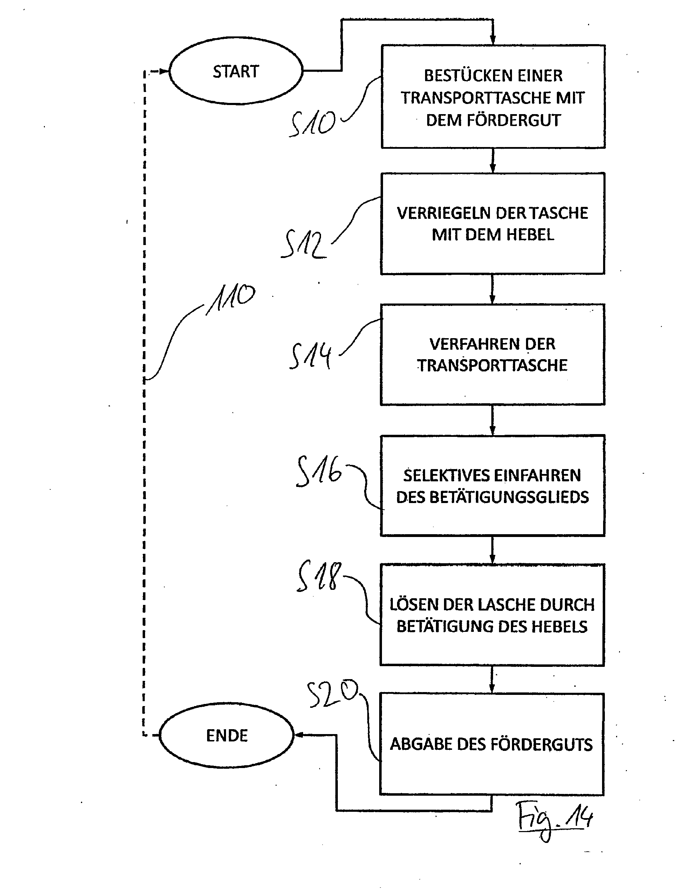

In Fig. 14 ist ein Flussdiagramm eines Verfahrens zur Beförderung eines Fördergutes in einer Förderanlage dargestellt.

In einem ersten Schritt S10 wird eine Transporttasche 10 mit einem Fördergut bestückt. Dies kann etwa gemäß den Fig. 11, 12a bis 12d erfolgen.

In einem nächsten Schritt S12 wird die Transporttasche 10 verriegelt, indem die Handhabungslasche 34 mit dem Klemmabschnitt 44 durch den Klemmhebel 40 verriegelt wird. Auf diese Weise kann sowohl eine Selbstsicherung durch Verstärkung der Haltekraft durch das Eigengewicht des Förderguts 12 als auch eine Versteifung der Seitenwandungen 28a, 28b des Ladehilfsmittels 22 der Transporttasche 10 zur seitlichen Führung und Sicherung gegen seitliches Herausfallen bewirkt werden.

Die Verriegelung kann einerseits durch den Bediener 94 erfolgen, der den Klemmhebel 40 entsprechend verschwenkt. Ebenso ist eine im Wesentlichen selbststätige Verriegelung denkbar, etwa wenn der Klemmhebel 40 bereits durch die Feder 79 oder ähnliches in Richtung der Haltestellung gedrängt wird bzw. vorgespannt ist.

In einem nächsten Schritt S14 wird die Transporttasche 10 verfahren. Es versteht sich dabei, dass während des gesamten Verfahrensablaufs ein kontinuierlicher Transport der Transporttasche 10 erfolgen kann, also insbesondere auch beim Beladen und beim Entladen. Die Bewegung kann auch getaktet erfolgen. Außerdem können die Be- und Entladestationen 86, 88 auch über FT-Schleifen an den Förderstrang 14 angebunden sein.

In einem nächsten Schritt S16 wird das Betätigungsglied 54 selektiv in den Förderpfad 16 eingefahren. Auf diese Weise kann ein Entladen initialisiert werden.

In einem anschließenden Schritt S18 erfolgt eine Betätigung des Klemmhebels 40, indem die Transporttasche 10 am Betätigungsglied 54 vorbeigefahren wird. Dabei wird die Klemmung des Klemmabschnitts 44 der Handhabungslasche 34 der Verschlussklappe 32 gelöst.

Anschließend kann in einem nächsten Schritt S20 das Fördergut 12 selbsttätig und automatisiert von der Transporttasche 10 abgeführt werden.

Danach kann das Verfahren enden. Eine mit 110 angedeutete gestrichelte Linie veranschaulicht jedoch, dass das Verfahren ohne Weiteres auch als Kreislauf durchgeführt werden kann.

Die oben stehende Beschreibung der Figuren hält sich bei der Wortwahl der Orientierungen der Koordinatensysteme generell an die in der (Intra-)logistik üblichen Bezeichnungen, so dass die Längsrichtung mit X, die Tiefe mit Z und die (vertikale) Höhe mit Y bezeichnet wurden.

Des Weiteren wurden gleiche Teile und Merkmale mit den gleichen Bezugsziffern versehen. Die in der Beschreibung enthaltenen Offenbarungen sind sinngemäß auf gleiche Teile und Merkmale mit denselben Bezugszeichen übertragbar. Lage- und Orientierungsangaben (wie zum Beispiel "oben", "unten", "seitlich", "längs", "quer", "horizontal", "vertikal" oder dergleichen) sind auf die unmittelbar beschriebene Figur bezogen. Bei einer Änderung der Lage oder Orientierung sind die Angaben aber sinngemäß auf die neue Lage bzw. Orientierung zu übertragen.

## Patentansprüche

1. Transporttasche zur Beförderung eines Fördergutes (12) in einer Förderanlage (11), insbesondere einer Hängeförderanlage,
mit einem Trägerteil (18), das zur Aufnahme an einem Förderstrang (14) der Förderanlage (11) ausgebildet ist,
mit einem Ladehilfsmittel (22) zur Aufnahme des Fördergutes (12), wobei das Trägerteil (18) eine Klemmeinrichtung (35) mit einem Klemmhebel (40) aufweist, **dadurch gekennzeichnet, dass** das Ladehilfsmittel (22) eine Verschlussklappe (32) aufweist, die eine Handhabungslasche (34) mit einem Klemmabschnitt (44) aufweist, und dass der Klemmhebel zwischen einer Haltestellung, in der eine Haltekraft auf den Klemmabschnitt (44) einwirkt, und einer Freigabestellung verlagerbar ist, wobei der Klemmhebel (40) in der Haltestellung derart mit dem Klemmabschnitt (44) gekoppelt ist, dass das aufgenommene Fördergut (12) durch sein Gewicht eine Erhöhung der Haltekraft bewirkt.

2. Transporttasche (10) nach Anspruch 1, wobei der Klemmhebel (40) einen Klemmarm (46) aufweist, der in der Haltestellung an einer Kontaktstelle (71) auf den Klemmabschnitt (44) einwirkt, und wobei der Klemmhebel (40) um eine Klemmachse (42) verschwenkbar ist, die im Wesentlichen unterhalb der Kontaktstelle (71) angeordnet ist.

3. Transporttasche (10) nach Anspruch 1 oder 2, wobei der Klemmhebel (40) derart mit dem Klemmabschnitt (44) zusammenwirkt, dass ein im Wesentlichen durch Gewichtskraft hervorgerufener Zug an der Handhabungslasche (34) eine Erhöhung einer auf den Klemmabschnitt (44) einwirkenden Klemmkraft bewirkt.

4. Transporttasche (10) nach einem der vorhergehenden Ansprüche, wobei das Ladehilfsmittel (22) zusätzlich eine erste und eine zweite Seitenwandung (28) und/oder eine Bodenwandung (30) aufweist.

5. Transporttasche (10) nach einem der vorhergehenden Ansprüche, wobei das Ladehilfsmittel (22) eine Rückseite (26) aufweist, die mit der zumindest ersten und zweiten Seitenwandung (28) verbindbar ist, und wobei die Verschlussklappe (32) eine Grundfläche (33) mit einer Bodenkante (31) aufweist, die an der Bodenwandung (29) angeschlagen ist.

6. Transporttasche (10) nach einem der vorhergehenden Ansprüche, wobei die Verschlussklappe (32) und/oder zumindest die Rückseite (26), die Seitenwandungen (28) oder die Bodenwandung (30) des Ladehilfsmittels (22) im Wesentlichen aus einem Gewebe, insbesondere einem Stoffgewebe oder einem Stoffverbundgewebe, hergestellt ist.

7. Transporttasche (10) nach einem der vorhergehenden Ansprüche, wobei der Klemmhebel (40) in Richtung der Haltestellung vorspannbar ist.

8. Transporttasche (10) nach einem der vorhergehenden Ansprüche, wobei der Klemmhebel (40) dazu ausgebildet ist, mit zumindest einem selektiv aktivierbaren Betätigungsglied (54) der Förderanlage (11) zur Entnahme des Fördergutes (12) zusammenzuwirken.

9. Transporttasche (10) nach einem der vorhergehenden Ansprüche, wobei das Ladehilfsmittel (22) bei geöffneter Verschlussklappe (32) derart als Hohlraum (85) ausgebildet ist und vorzugsweise eine Verjüngung aufweist, dass ein weiteres Ladehilfsmittel (22) einer weiteren gleich orientierten Transporttasche (10b, 10c) stapelbar in den Hohlraum (85) einfahren kann.

10. Transporttasche (10) nach einem der vorhergehenden Ansprüche, wobei die Klemmeirichtung (35) zumindest ein Formschlusselement (83) und/oder ein Formschlussgegenelement (84) zur Erhöhung der Haltekraft aufweist.

11. Transporttasche (10) nach einem der vorhergehenden Ansprüche, wobei zumindest der Klemmabschnitt (44) und/oder der Klemmarm (46) eine Beschichtung oder Oberflächenbearbeitung zur Erhöhung der Haltekraft aufweist.

12. Transporttasche (10) nach einem der vorhergehenden Ansprüche, wobei die Verschlussklappe (32) der Transporttasche (10) entlang eines Förderpfades (16) in Längsrichtung X stromaufwärts orientiert ist.

13. Förderanlage, insbesondere Hängeförderanlage, mit einem Förderstrang (14) mit zumindest einer Transporttasche (10) nach einem der vorhergehenden Ansprüche.

14. Förderanlage (11) nach Anspruch 13, die zumindest eine Beladestation (86) aufweist, die unterhalb des Förderstranges (14) angeordnet ist und die eine Ladefläche (96) aufweist, die im Wesentlichen parallel zum Förderstrang (14) ausgerichtet ist, wobei vorzugsweise die Verschlussklappe (32) einer geöffneten Transporttasche (10) entlang der Ladefläche (96) gleiten kann.

15. Förderanlage (11) nach Anspruch 13 oder 14, die zumindest eine Entladestation (88) aufweist, die unterhalb des Förderstranges (14) angeordnet ist und die eine Entladefläche (102) aufweist, die vorzugsweise derart gegenüber dem Förderstrang (14) geneigt ist und entlang der die Verschlussklappe (32) einer geöffneten Transporttasche (10) gleiten kann, dass das Fördergut (12) einer entriegelten Transporttasche (10) sich bei der Abgabe selbsttätig entlang der Verschlussklappe (32) aus dem Ladehilfsmittel (22) heraus bewegen kann.

16. Verfahren zur Beförderung eines Fördergutes (12) in einer Förderanlage (11), insbesondere einer Hängeförderanlage, mit den folgenden Schritten:
- Bereitstellung einer Transporttasche (10) mit einem Trägerteil (18), das zur Aufnahme an einem Förderstrang (14) der Förderanlage (11) ausgebildet ist,
wobei die Transporttasche (10) ein Ladehilfsmittel (22) zur Aufnahme des Fördergutes (12) aufweist, wobei das Trägerteil (18) eine Klemmeinrichtung (35) mit einem Klemmhebel (40) aufweist, **dadurch gekennzeichnet, dass** das Ladehilfsmittel (22) eine Verschlussklappe (32) aufweist, die eine Handhabungslasche (34) mit einem Klemmabschnitt (44) aufweist,
zwischen einer Haltestellung, in der eine Haltekraft auf den Klemmabschnitt (44) einwirkt, und einer Freigabestellung verlagerbar ist, wobei der Klemmhebel (40) in der Haltestellung derart mit dem Klemmabschnitt (44) zusammenwirkt, dass das aufgenommene Fördergut (12) durch sein Gewicht eine Erhöhung der Haltekraft bewirkt;
- Bestücken der Transporttasche (10) mit dem Fördergut (12);
- Einführen des Klemmabschnitts (44) der Handhabungslasche (34) in einen Halteraum (50) am Trägerteil (18); und
- Verriegeln der Transporttasche (10).

## Claims

1. A transport bag for transporting a to-be-conveyed article (12) in a conveying system (11), particularly an overheard conveying system, comprising a support piece (18) that is configured for being received at a conveying line (14) of the conveying system (11),
a loading aid device (22) for receiving the to-be-conveyed article (12), wherein the support piece (18) comprises a clamping device (35) including a clamping lever (40), **characterized in that**
the loading aid device (22) comprises a closing flap (32) that comprises a handling lug (34) including a clamping section (44), and **in that**
the clamping lever is movable between a hold position in which a holding force acts on the clamping section (44) and a release position,
wherein the clamping lever (40) is coupled in the hold position with the clamping section (44) in such a way that the received to-be-conveyed article (12), due to its weight, effects an increase of the holding force.

2. The transport bag (10) according to claim 1, wherein the clamping lever (40) comprises a clamping arm (46) that acts in the hold position at a contact location (71) on the clamping section (44), and wherein the clamping lever (40) is pivotable about a clamping axis (42) that is substantially arranged beneath the contact location (71).

3. The transport bag (10) according to claim 1 or 2, wherein the clamping lever (40) cooperates with the clamping section (44) in such a way that a pull at the handling lug (34) that is basically caused by weight force effects an increase of a clamping force that acts on the clamping section (44).

4. The transport bag (10) according to any of the preceding claims, wherein the loading aid device (22) further comprises a first and a second side wall (28) and/or a bottom wall (30).

5. The loading aid device (10) according to any of the preceding claims, wherein the loading aid device (22) comprises a rear side (26) that can be connected to the at least first and second side wall (28), and wherein the closing flap (32) comprises a base area (33) including a bottom edge (31) that is mounted at the bottom wall (29).

6. The transport bag (10) according to any of the preceding claims, wherein the closing flap (32) and/or at least the rear side (26), the side walls (28) or the bottom wall (30) of the loading aid device (22) is essentially manufactured from fabric, particularly from cloth fabric or from cloth compound fabric.

7. The transport bag (10) according to any of the preceding claims, wherein the clamping lever (40) can be biased towards the hold position.

8. The transport bag (10) according to any of the preceding claims, wherein the clamping lever (40) is configured to cooperate with at least one selectively actuable actuation member (54) of the conveying system (11) to unload the to-be-conveyed article (12).

9. The transport bag (10) according to any of the preceding claims, wherein the loading aid device (22), when the closing flap (32) is open, is arranged in such a way as a cavity (85) and preferably comprises a tapering that a further loading aid device (22) of a further similarly oriented transport bag (10b, 10c) may enter the cavity (85) in a nestable fashion.

10. The transport bag (10) according to any of the preceding claims, wherein the clamping device (35) comprises at least one positive locking element (83) and/or a positive locking counter element (84) to increase the holding force.

11. The transport bag (10) according to any of the preceding claims, wherein at least the clamping section (44) and/or the clamping arm (46) comprise a coating or a surface treatment for increasing the holding force.

12. The transport bag according to any of the preceding claims, wherein the closing flap (32) of the transport bag (10) is oriented in an upstream fashion in a longitudinal direction X along a conveying path (16).

13. A conveying system, particularly an overhead conveying system, comprising a conveying line (14) including at least one transport bag (10) according to any of the preceding claims.

14. The conveying system (11) according to claim 13, comprising at least a first loading station (86) that is arranged beneath the conveying line (14) and that comprises a loading surface (96) that is basically arranged parallel to the conveying line (14), wherein the closing flap (32) of an open transport bag (10) may preferably slide along the loading surface (96).

15. The conveying system (11) according to claim 13 or 14, comprising at least one unloading station (88) that is arranged beneath the conveying line (14) and that comprises an unloading surface (102) that is preferably inclined with respect to the conveying line (14) and along which the closing flap (32) of an open transport bag (10) may slide in such a way that the to-be-conveyed article (12) of an unlocked transport bag (10) may move out of the loading aid device (22) along the closing flap (32) in a self-acting fashion when unloading.

16. A method for transporting a to-be-conveyed article (12) in a conveying system (11), particularly an overhead conveying system, comprising the following steps:
- providing a transport bag (10) comprising a support piece (18) that is configured for being received at a conveying line (14) of the conveying system (11),
wherein the transport bag (10) comprises a loading aid device (22) for receiving the to-be-conveyed article (12), wherein the support piece (18) comprises a clamping device (35) including a clamping lever (40), **characterized in that** the loading aid device (22) comprises a closing flap (32) that comprises a handling lug (34) including a clamping section (44), and **in that**
the clamping lever is movable between a hold position in which a holding force acts on the clamping section (44) and a release position, wherein the clamping lever (40) cooperates in the hold position with the clamping section (44) in such a way that the received to-be-conveyed article (12), due to its weight, effects an increase of the holding force;
- fitting the transport bag (10) with the to-be-conveyed article (12);
- inserting the clamping section (44) of the handling lug (34) in a holding space (50) at the support piece (18); and
- locking the transport bag (10).

## Revendications

1. Pochette de transport pour le transport d'un article à transporter (12) dans une installation de transport (11), en particulier une installation de transport suspendue,
comprenant une partie de support (18) qui est réalisée pour être reçue dans une ligne de transport (14) de l'installation de transport (11),
comprenant un moyen de chargement auxiliaire (22) pour recevoir l'article à transporter (12), la partie de support (18) comprenant un dispositif de serrage (35) pourvu d'un levier de serrage (40), **caractérisée en ce que** le moyen de chargement auxiliaire (22) comprend un volet de fermeture (32) qui comprend une languette de manipulation (34) pourvue d'une portion de serrage (44), et **en ce que** le levier de serrage peut être déplacé entre une position de retenue dans laquelle une force de retenue s'exerce sur la portion de serrage (44) et une position de libération, le levier de serrage (40) étant accouplé à la portion de serrage (44) dans la position de retenue de telle sorte que l'article à transporter reçu (12) provoque, de par son poids, une augmentation de la force de retenue.

2. Pochette de transport (10) selon la revendication 1, dans laquelle le levier de serrage (40) comprend un bras de serrage (46) qui agit en un point de contact (71) sur la portion de serrage (44) dans la position de retenue, et dans laquelle le levier de serrage (40) peut être pivoté autour d'un axe de serrage (42) qui est disposé essentiellement en dessous du point de contact (71).

3. Pochette de transport (10) selon la revendication 1 ou 2, dans laquelle le levier de serrage (40) coopère avec la portion de serrage (44) de telle sorte qu'une traction, produite essentiellement par le poids, sur la languette de manipulation (34) produise une augmentation d'une force de serrage agissant sur la portion de serrage (44).

4. Pochette de transport (10) selon l'une quelconque des revendications précédentes, dans laquelle le moyen de chargement auxiliaire (22) comprend en outre une première et une deuxième paroi latérale (28) et/ou une paroi de fond (30).

5. Pochette de transport (10) selon l'une quelconque des revendications précédentes, dans laquelle le moyen de chargement auxiliaire (22) comprend un côté arrière (26) qui peut être relié à l'au moins une première et deuxième paroi latérale (28), et dans laquelle le volet de fermeture (32) comprend une surface de base (33) pourvue d'une arrête de fond (31) qui est attachée à la paroi de fond (29).

6. Pochette de transport (10) selon l'une quelconque des revendications précédentes, dans laquelle le volet de fermeture (32) et/ou au moins le côté arrière (26), les parois latérales (28) ou la paroi de fond (30) du moyen de chargement auxiliaire (22) sont fabriqués essentiellement à partir d'une étoffe, en particulier d'un tissu ou d'un tissu composite.

7. Pochette de transport (10) selon l'une quelconque des revendications précédentes, dans laquelle le levier de serrage (40) peut être précontraint en direction de la position de retenue.

8. Pochette de transport (10) selon l'une quelconque des revendications précédentes, dans laquelle le levier de serrage (40) est réalisé pour coopérer avec au moins un organe d'actionnement (54), pouvant être activé de manière sélective, de l'installation de transport (11) pour le prélèvement de l'article à transporter (12).

9. Pochette de transport (10) selon l'une quelconque des revendications précédentes, dans laquelle le moyen de chargement auxiliaire (22) est, lorsque le volet de fermeture (32) est ouvert, réalisé sous forme d'espace creux (85) et comprend de préférence un rétrécissement, de telle sorte qu'un moyen de chargement auxiliaire (22) supplémentaire d'une pochette de transport (10b, 10c) supplémentaire orientée de manière identique puisse rentrer de manière empilable dans l'espace creux (85).

10. Pochette de transport (10) selon l'une quelconque des revendications précédentes, dans laquelle le dispositif de serrage (35) comprend au moins un élément d'engagement par complémentarité de formes (83) et/ou un élément conjugué d'engagement par complémentarité de formes (84) pour augmenter la force de retenue.

11. Pochette de transport (10) selon l'une quelconque des revendications précédentes, dans laquelle au moins la portion de serrage (44) et/ou le bras de serrage (46) comprend/comprennent un revêtement ou un traitement de surface pour augmenter la force de retenue.

12. Pochette de transport (10) selon l'une quelconque des revendications précédentes, dans laquelle le volet de fermeture (32) de la pochette de transport (10) est orienté vers l'amont dans la direction longitudinale X le long d'une voie de transport (16).

13. Installation de transport, en particulier installation de transport suspendue, comprenant une ligne de transport (14) pourvue d'au moins une pochette de transport (10) selon l'une quelconque des revendications précédentes.

14. installation de transport (11) selon la revendication 13, laquelle comprend au moins un poste de chargement (86) qui est disposé en dessous de la ligne de transport (14) et qui comprend une surface de chargement (96) qui est orientée essentiellement parallèlement à la ligne de transport (14), le volet de fermeture (32) d'une pochette de transport ouverte (10) pouvant de préférence glisser le long de la surface de chargement (96).

15. installation de transport (11) selon la revendication 13 ou 14, laquelle comprend au moins un poste de déchargement (88) qui est disposé en dessous de la ligne de transport (14) et qui comprend une surface de déchargement (102) qui est de préférence inclinée par rapport à la ligne de transport (14) et le long de laquelle le volet de fermeture (32) d'une pochette de transport ouverte (10) peut glisser, de telle sorte que l'article à transporter (12) d'une pochette de transport (10) déverrouillée puisse se déplacer automatiquement hors du moyen de chargement auxiliaire (22) le long du volet de fermeture (32) lors de la distribution.

16. Procédé de transport d'un article à transporter (12) dans une installation de transport (11), en particulier une installation de transport suspendue, comprenant les étapes suivantes :
- fournir une pochette de transport (10) comprenant une partie de support (18) qui est réalisée pour être reçue dans une ligne de transport (14) de l'installation de transport (11),
la pochette de transport (10) comprenant un moyen de chargement auxiliaire (22) pour recevoir l'article à transporter (12), la partie de support (18) comprenant un dispositif de serrage (35) pourvu d'un levier de serrage (40), **caractérisé en ce que** le moyen de chargement auxiliaire (22) comprend un volet de fermeture (32) qui comprend une languette de manipulation (34) pourvue d'une portion de serrage (44), et **en ce que** le levier de serrage peut être déplacé entre une position de retenue dans laquelle une force de retenue s'exerce sur la portion de serrage (44) et une position de libération, le levier de serrage (40) coopérant avec la portion de serrage (44) dans la position de retenue de telle sorte que l'article à transporter reçu (12) provoque, de par son poids, une augmentation de la force de retenue ;
- munir la pochette de transport (10) de l'article à transporter (12) ;
- insérer la portion de serrage (44) de la languette de manipulation (34) dans un espace de retenue (50) sur la partie de support (18); et
- verrouiller la pochette de transport (10).
